# EUROPÄISCHE PATENTSCHRIFT

(11) **EP 1 757 488 B1**
(45) Veröffentlichungstag und Bekanntmachung des Hinweises auf die Patenterteilung: **07.09.2011**
(21) Anmeldenummer: 06016501.6
(22) Anmeldetag: 08.08.2006
(51) Int. Cl.: B60R 9/06, B60R 9/10, B60D 1/52, B60R 19/26, B60D 1/64, B60R 19/48, B60D 1/56

(54) **Trägeranordnung für ein Kraftfahrzeug**
Support structure for vehicle
Structure de support pour véhicule

(30) Priorität: 25.08.2005 DE 102005040181; 25.08.2005 DE 102005040182; 01.03.2006 DE 102006009275
(43) Veröffentlichungstag der Anmeldung: 28.02.2007
(60) Teilanmeldung: 10012161.5
(73) Patentinhaber: WESTFALIA - Automotive GmbH, 33378 Rheda-Wiedenbrück (DE)
(72) Erfinder: Hahn, Jochen, 74223 Flein (DE)
(74) Vertreter: Bregenzer, Michael

(56) Entgegenhaltungen:
- EP-A- 0 747 244
- EP-A- 0 934 838
- EP-A- 1 234 729
- WO-A-2006/065117
- DE-A1- 4 403 715
- DE-A1- 10 032 002
- DE-A1- 10 061 954
- DE-A1- 10 338 724
- DE-A1- 10 359 483
- DE-B3-102005 033 082
- DE-U1- 20 305 807
- FR-A- 2 823 161
- US-B1- 6 702 347

## Beschreibung

Die Erfindung betrifft eine Trägeranordnung für ein Kraftfahrzeug, insbesondere einen Personenkraftwagen oder ein leichtes Nutzfahrzeug, die im Heckbereich des Kraftfahrzeugs anordenbar ist, gemäß dem Oberbegriff des Anspruchs 1 sowie ein mit der Trägeranordnung und einer Halteranordnung hierfür ausgestattetes Kraftfahrzeug.

Eine solche Trägeranordnung geht aus DE 44 03 715 A1 hervor. An einem eine Trägeranordnung bildenden Lastenträger sind zwei Tragarme gabelartig angeordnet. Die Tragarme sind in Steckhülsen am Heck des Kraftfahrzeuges einsteckbar und mittels eines an einem jeweiligen Tragarm angeordneten Betätigungselement verriegelbar und entriegelbar.

Bei einem aus FR 2 823 161 A1 bekannten Heckträger, der in an einem Kraftfahrzeug vorgesehene Steckaufnahmen einsteckbar ist, ist zur Verriegelung der gabelartigen Tragarme in jedem der Tragarme ein federbelasteter Hebel vorgesehen, der in eine Aufnahme am Kraftfahrzeug einhakbar ist.

Ein aus DE 10 2005 033 082 B3 bekannter Heckträger kann in eine fahrzeugseitige Aufnahmeeinrichtung eingesteckt werden. Zur Verriegelung und Entriegelung des Eckträgers dienen Verschlüsse, die an Haltearmen des Heckträgers schwenkbar angeordnet sind.

Es ist bekannt, Fahrradträger lösbar am Heck eines Fahrzeuges zu befestigen, wobei die Fahrradträger auf eine am Fahrzeug bereits vorhandene Anhängekupplung aufgesetzt werden. Die Anhängekupplung ist fest, abnehmbar oder schwenkbar an dem Fahrzeug befestigt. Zum Halten der Anhängekupplung wird eine Querträgerkonstruktion benötigt, beispielsweise ein Rundrohr oder Vierkantrohr, das im Bereich des Fahrzeughecks mit Hilfe von Blechteilen, Hohlprofilen und dergleichen an der Karosserie des Fahrzeugs befestigt ist. Der Querträger verläuft üblicherweise verborgen, beispielsweise zwischen einer Heckwand der Fahrzeugkarosserie und dem Fahrzeugstoßfänger.

Durch solche Querträger werden die Energieabsorptionseigenschaften des Fahrzeugs schlechter, da beispielsweise die Wirksamkeit der Stoßstange bzw. die Verformbarkeit der Stoßstange und des Fahrzeughecks durch die Querträger verringert ist. Dadurch wird das Unfallverhalten sowohl bei kleinen Geschwindigkeiten, wie beispielsweise bei Einparkunfällen, als auch bei schwereren Unfällen verschlechtert.

Ein Fahrradträger, der auf die Kupplung aufgesetzt wird, findet an der Kupplung nur einen punktuellen Halt, so dass zusätzliche Befestigungskonstruktionen zum Halten des Fahrradträgers am Heck des Fahrzeugs notwendig sein können. Zudem kann es erforderlich sein, den Fahrradträger an unterschiedlich ausgestaltete Kupplungstypen anzupassen, was die Konstruktion verteuert.

Es ist daher die Aufgabe der vorliegenden Erfindung, ein Trägersystem mit einer Trägeranordnung und einer Halteranordnung für das Kraftfahrzeug bereitzustellen, das einfach verriegelbar oder entriegelbar ist.

Zur Lösung der Aufgabe sind eine Trägeranordnung für ein Kraftfahrzeug, insbesondere für einen Personenkraftwagen oder ein leichtes Nutzfahrzeug, gemäß der technischen Lehre des Anspruchs 1 und ein mit der Trägeranordnung und einer dazu passenden Halteranordnung ausgestattetes Kraftfahrzeug gemäß der technischen Lehre eines weiteren unabhängigen Anspruchs vorgesehen.

Die Trägeranordnung kann einschließlich der Querträgeranordnung, die im montierten Zustand im Heckbereich des Kraftfahrzeugs angeordnet ist, als Ganzes entfernt werden, so dass hintere Verformungsbereiche der Fahrzeugkarosserie bzw. des Heck-Stoßfängers gegebenenfalls Aufprallenergie aufnehmen können. Das Gewicht des Kraftfahrzeuges wird reduziert, wenn die Trägeranordnung entfernt ist.

Das Kraftfahrzeug, beispielsweise ein Personenkraftwagen, ein Geländewagen, ein Van oder auch ein leichtes Nutzfahrzeug bis beispielsweise 3,5 t, kann flexibel mit unterschiedlichen erfindungsgemäßen Trägeranordnungen ausgestattet werden. Beispielsweise kann an der Querträgeranordnung eine Kupplung mit einem Kupplungshals und einer Kupplungskugel zum Anhängen eines Anhängers fest oder entfernbar und/oder schwenkbar angeordnet sein.

Die Kupplung kann z.B. schwenkbar zwischen einer Gebrauchsstellung und einer Nichtgebrauchsstellung an der Querträgeranordnung angeordnet sein.

Es ist auch möglich, dass die Querträgeranordnung Auflageflächen und/oder Behälter und/oder Gestelle zum Transportieren von Gegenständen aufweist. An der Querträgeranordnung kann z.B. eine horizontale Auflagefläche, mindestens ein Fahrradhalter, ein fest montierter oder entfernbarer Transportbehälter, eine Tragegestellanordnung, beispielsweise eine Art Gitter, oder eine Trittbrettanordnung vorhanden sein. Die Trittbrettanordnung eignet sich beispielsweise zum Besteigen eines Laderaums eines leichten Nutzfahrzeugs. Es versteht sich, dass die vorgenannten Varianten auch miteinander kombiniert bei einer erfindungsgemäßen Trägeranordnung vorgesehen sein können.

Ferner kann an der Trägeranordnung, z.B. hinter der Querträgeranordnung, vorteilhaft eine Beleuchtungseinrichtung vorgesehen sein, die in Ergänzung oder als Ersatz einer Heckbeleuchtung des Kraftfahrzeugs betreibbar ist.

Die Trägeranordnung wird beispielsweise von hinten an dem Kraftfahrzeug montiert. Es versteht sich, dass z.B. auch eine Montage von schräg unten oder oben denkbar ist. Die Trägeranordnung bildet eine Art U-förmiger Bügel oder eine Gabel. Es können aber auch weitere Haltearme neben den beiden seitlichen Haltearmen vorgesehen sein, beispielsweise ein mittiger Haltearm, so dass die Trägeranordnung eine dreizackartige, gabelförmige Struktur aufweist.

Die erfindungsgemäße Halteranordnung ist zweckmäßigerweise bei vorhandenen Kraftfahrzeugen nachrüstbar. Die Halter sind zweckmäßigerweise im Bereich von Längsträgern oder Pralltöpfen der Karosserie des Fahrzeugs anordenbar. Unter dem Begriff Pralltopf werden auch sogenannte Crashboxen verstanden. Es ist auch möglich, dass die Halter einen integralen Bestandteil einer Tragstruktur der Karosserie bilden, z.B. einen integralen Bestandteil von Längsträgern der Karosserie und/oder von Pralltöpfen. Die konstruktiven Freiheitsgrade, die das erfindungsgemäße Trägersystem bietet, ermöglichen es beispielsweise, dass zwischen der Karosserie und dem Heckstoßfänger mindestens ein energieabsorbierendes, insbesondere elastisches Prallelement angeordnet ist, das, insbesondere bei entfernter Trägeranordnung, Aufprallenergie bei einem Aufprall eines Gegenstandes auf das Kraftfahrzeug oder umgekehrt aufnimmt.

Die erfindungsgemäße Trägeranordnung leitet Kräfte, beispielsweise dynamische Kräfte bei Anhängerbetrieb oder Kräfte, die durch aufgelegte Lasten entstehen, an horizontal relativ weit voneinander entfernten Bereichen der Karosserie auf die Karosserie ein. Die Kraft- und Momentübertragung ist wesentlich besser als beispielsweise bei einem Fahrradträger, der auf einen vorhandenen, konventionellen Anhänger-Kugelkopf aufgesetzt wird. Der Kraftstoffverbrauch des Kraftfahrzeugs verringert sich, wenn das Trägersystem vollständig von dem Kraftfahrzeug entfernt ist. An dem Fahrzeug verbleiben lediglich die Halter, wohingegen Querträger, die man von konventionellen Anhängerkupplungen kennt, nicht erforderlich sind. Es versteht sich, dass aus Stabilitäts- oder Festigkeitsgründen auch bei einer erfindungsgemäßen Halteranordnung ein die Halter verbindender Querträger vorhanden sein kann, vorzugsweise im Bodenbereich der Kraftfahrzeug-Karosserie.

Die Trägeranordnung ist an die Halteranordnung ansteckbar. An den Haltearmen sind Steckabschnitte vorhanden, die an und/oder in Steckaufnahmen der Halter steckbar sind. Die Steckabschnitte haben beispielsweise eine zylindrische oder eine hohlzylindrische oder eine rohrartige Gestalt und bilden Einsteckabschnitte in der Art von Einsteckbolzen oder Aufsteckabschnitte, die an oder in korrespondierende, z.B. zylindrische oder eine hohlzylindrische, Einsteckaufnahmen oder Aufsteckaufnahmen der Halteranordnung gesteckt werden können.

Eine besonders bevorzugte Variante der Erfindung sieht vor, dass die Haltearme durch hintere Öffnungen des Heckstoßfängers hindurch in oder an die Halter steckbar sind. Der Heckstoßfänger hat vorteilhafterweise Abdeckungen zum Verschließen der Öffnungen. Die Abdeckungen sind zweckmäßigerweise beweglich angelenkt, z.B. an dem Stoßfänger, oder und/oder entfernbar. Die Abdeckungen verhindern gleichzeitig eine Verschmutzung der Öffnungen und/oder der Halter.

Der Heckstoßfänger kann einen integralen Bestandteil der Halteranordnung bilden.

An der Trägeranordnung und/oder der Halteranordnung sind zweckmäßigerweise Verriegelungseinrichtungen zum Verriegeln der Trägeranordnung an der Halteranordnung vorgesehen. Eine Träger-Verriegelungseinrichtung ist z.B. im vorderen Bereich eines oder mehrerer Haltearme angeordnet. Die Halter-Verriegelungseinrichtung ist vorzugsweise an mindestens einem der Halter angeordnet.

Die Verriegelung und/oder die Entriegelung der Träger- oder der Halter-Verriegelungseinrichtung erfolgt beispielsweise durch einen Bedieneingriff bzw. eine Betätigungshandlung eines Bedieners. Zum Betätigen der Halter- oder der Träger-Verriegelungseinrichtung, beispielsweise zum Verriegeln oder Entriegeln, ist vorteilhafterweise eine Betätigungshandhabe, zweckmäßigerweise ein Hebel und/oder ein Handgriff und/oder ein Bedienknopf vorhanden. Die Halter-Betätigungshandhabe ist beispielsweise in einem Gepäckabteil oder Kofferraum des Kraftfahrzeugs vor Verschmutzungen geschützt untergebracht.

Die jeweilige Halter- und/oder Träger Verriegelungseinrichtung verriegelt sich vorzugsweise selbsttätig bzw. automatisch, wenn die Trägeranordnung an die Halteanordnung angesteckt wird.

Zur Verriegelung dienen bei der Träger- und/oder der Halter-Verriegelungseinrichtung zweckmäßigerweise eines oder mehrere Verriegelungselemente, z.B. Formteile in Gestalt von Bolzen, Kugeln, Walzen oder dergleichen, die an der Träger- und/oder der Halter-Verriegelungseinrichtung angeordnet sind und zur Verriegelung in Aufnahmen einer Aufnahmeanordnung an der jeweils anderen Verriegelungseinrichtung eingreifen. Diese Aufnahmen sind beispielsweise Ausnehmungen, Nuten oder dergleichen am gesamten oder teilweisen Innenumfang oder Außenumfang der Halter oder der Haltearme. Jedem Verriegelungselement kann eine individuelle Ausnehmung der Aufnahmeanordnung zugeordnet sein. Es versteht sich, dass auch schrägverstellbare Keile oder sonstige Formelemente die Verriegelungselemente oder später noch beschriebene Sicherungselemente bilden können.

Die jeweilige, mindestens einem der Verriegelungselemente zugeordnete Ausnehmung weist zweckmäßigerweise eine in Richtung eines Träger-Anschlags des Trägers geneigte Einlaufschräge zum Verspannen des Träger-Anschlags mit einem Halter-Anschlag des Halters auf. Ferner kann die Ausnehmung einen geradlinigen Abschnitt in einem ansonsten kreisförmigen Verlauf, beispielsweise einer Ringnut oder Kugelsitzrinne, aufweisen. Die Einlaufschräge oder der geradlinige Abschnitt ermöglichen es, dass die Verriegelungselemente durch zusätzliche Verstellung eines sie betätigenden Betätigungselements, beispielsweise eines Verriegelungsbolzens oder Verdrängerbolzens, in Richtung einer Verriegelungsstellung auch bei einem Verschleiß sozusagen nachgestellt werden und den Träger am Halter verspannen.

Die Verriegelungselemente sind vorteilhaft mit einem Betätigungselement betätigbar. Das Betätigungselement, z.B. ein Verriegelungsbolzen, ist vorteilhaft in einem Führungskanal z.B. in einem Steckabschnitt eines Haltearmes oder eines Halters längsverschieblich geführt. Ferner sind Keilelemente, Federn oder ein Verdrängergetriebe zur Betätigung der verriegelungselemente denkbar. Das Betätigungselement verdrängt das mindestens eine Verriegelungselement z.B. aus einem Kanal heraus, bis es in eine Ausnehmung verriegelnd eingreift. Die Verriegelungselemente werden durch das Betätigungselement z.B. nach radial außen aus einem Steckabschnitt eines Haltearmes druckbeaufschlagt.

Das Betätigungselement, beispielsweise einem Sperrbolzen, hat zweckmäßigerweise mindestens eine Schrägfläche, z.B. einen Konus, zum Betätigen der Verriegelungselemente. Die mindestens eine Schrägfläche hat vorteilhaft eine selbsthemmend flache Neigung, so dass eine von den Verriegelungselementen auf das Betätigungselement rückwirkende Kraft keine Längsverlagerung des Betätigungselements in Richtung der Lösestellung bewirkt. Mit der Neigung der Schrägfläche sind Alterungstoleranzen ausgleichbar.

Die Verriegelungselemente bilden z.B. Spannelemente. Wenn die Trägeranordnung an dem Kraftfahrzeug montiert ist bzw. ein jeweiliger Haltearm in eine jeweilige Steckaufnahme eines Halters eingesteckt ist, verspannen mindestens ein Verriegelungselement, zweckmäßigerweise mindestens zwei Verriegelungselemente, den Haltearm in Fahrzeuglängsrichtung und in Fahrzeugquerrichtung.

Eines oder mehr Verriegelungselemente sind z.B. mit einem in dem Steckabschnitt eines Haltearmes angeordneten Betätigungselement der Verriegelungsanordnung vor einen Außenumfang des Steckabschnitts in eine Verriegelungsstellung verdrängbar, in der die Verriegelungselemente gegen eine korrespondierende Aufnahmeanordnung an der Steckaufnahme eingreifen und eine Spannstellung einnehmen.

Die Verriegelungselemente spannen vorteilhaft mindestens einen Träger-Anschlag gegen mindestens einen Halter-Anschlag, z.B. einen Steckaufnahmeanschlag an einer Steckaufnahme des jeweiligen Halters. Die Anschläge sind bezüglich einer Steck-Längsrichtung des Steckabschnitts in oder an den Halter von den Verriegelungselementen entfernt angeordnet.

Der mindestens eine Halter-Anschlag ist zweckmäßigerweise im Bereich einer Einstecköffnung einer Steckaufnahme eines jeweiligen Halters angeordnet. Der Halter-Anschlag umfasst zweckmäßigerweise eine Stirnseite und/oder eine Innenseite einer Umfangswandung der Steckaufnahme oder ist daran angeordnet. Beispielsweise hat der mindestens eine Halter-Anschlag mindestens eine kreisrunde und/oder eine elliptische und/oder eine V-förmige Ausnehmung (beide Varianten können vorgesehen sein), wobei die Aufnahmen zur Einstecköffnung hin breiter sind. In diese Aufnahmen können korrespondierende Träger-Anschläge, die korrespondierend kreisförmig bzw. V-förmig sind, eingreifen. Die Anschlag-Ausnehmungen sind beispielsweise an einer oder mehreren Seitenwandungen der Einstecköffnung angeordnet, beispielsweise an zwei gegenüberliegenden Seiten der Einstecköffnung.

Beispielsweise sind drei oder mehr im wesentlichen bezüglich der Anschläge gleichwirkende Verriegelungselemente, insbesondere drei Kugeln, vorgesehen. Die Verriegelungselemente sind z.B. in Eckbereichen eines gleichschenkligen Dreiecks, insbesondere in derselben Längsebene, angeordnet und haben denselben Längsabstand zu den Anschlägen.

Nachfolgend wird ferner ein schräg verspannendes oder verkeilendes Verriegelungskonzept vorgestellt:

Die Verriegelungselemente sind vorteilhaft an einer ersten Längshälfte des Steckabschnitts eines Haltearmes vorgesehen, dort sozusagen konzentriert. Dort ist vorteilhaft ein einziges Verriegelungselement vorgesehen und übt in der Spannstellung eine Spannkraft quer zur Steck-Längsrichtung auf mindestens eine Spannfläche des Steckabschnitts aus. Zweckmäßigerweise sind mindestens zwei Verriegelungselemente (es können auch drei oder mehr sein) vorteilhaft an der ersten Längshälfte des Steckabschnitts eines Haltearmes und in Umfangsrichtung des Steckabschnitts in einem Abstand zueinander angeordnet und üben in der Spannstellung eine Spannkraft quer zur Steck-Längsrichtung auf mindestens eine Spannfläche des Steckabschnitts aus. An der zweiten Längshälfte ist dann vorteilhaft kein Verriegelungselement angeordnet. Der Steckabschnitt hat bei dieser Ausgestaltung einen besonders festen Sitz in der Steckaufnahme. Die Spannfläche ist vorteilhaft an der zweiten Längshälfte des Steckabschnitts angeordnet. Die Verriegelungselemente spannen den Steckabschnitt in Steck-Längsrichtung und zudem quer zur Steck-Längsrichtung. Somit wird der Steckabschnitt z.B. eines Halters oder eines Haltearms in der Steckaufnahme verkeilt. Weil mindestens zwei Verriegelungselemente vorhanden sind, wird der Steckabschnitt fest und über einen großen Umfangsbereich wirksam bezüglich der Steck-Längsrichtung verspannt. Dazu kommt noch die durch die Anordnung der Verriegelungselemente nur auf einem Teilumfang des Steckabschnitts bedingte Quer-Spannkraft quer zur Steck-Längsrichtung.

Die mindestens zwei Verriegelungselemente greifen zweckmäßigerweise spreizfußartig in die Aufnahmeanordnung ein. Beispielsweise umfassen zwei Verriegelungselemente einen Winkel von etwa 100° bis 140°. Eine Anordnung in einem Winkel von etwa 120° ist besonders bevorzugt.

Die mindestens zwei schräg verspannenden Verriegelungselemente sind zweckmäßigerweise so angeordnet, dass eine gleichmäßige Kraftbeaufschlagung sowohl in Fahrzeuglängsrichtung als auch in Fahrzeugquerrichtung möglich ist.

Die Spannkraft kann an mehreren Stellen vorteilhaft gebildet sein:

Beispielsweise kann die Spannkraft an einem oder mehreren Umfangsbereichen des Steckabschnitts auftreten. Der Umfangsbereich kann beispielsweise im Bereich der Einstecköffnung sein oder, was besonders bevorzugt ist, etwa in derselben Längsposition bezogen auf die Steck-Längsrichtung, wo auch die mindestens zwei Verriegelungselemente angeordnet sind. Beispielsweise weist die Aufnahmeanordnung eine ringförmige Aufnahme auf, in der eine Rinne oder einzelne Ausnehmungen für die mindestens zwei Verriegelungselemente vorgesehen sind. In der Spannstellung spannen die mindestens zwei Verriegelungselemente einen Umfangsbereich des Steckabschnitts gegen die ringförmige Aufnahme, die der zweiten Längshälfte des Steckabschnitts zugeordnet ist. Der mindestens eine Umfangsbereich hat bezogen auf die Steck-Längsrichtung zweckmäßigerweise etwa dieselbe Längsposition wie die mindestens zwei Verriegelungselemente in der ersten Längshälfte.

Ferner können die mindestens zwei schräg verspannenden Verriegelungselemente, die bezogen auf die Steck-Längsrichtung in einem Längsabstand zu dem mindestens einen Träger-Anschlag sowie dem jeweils korrespondierenden Halter-Anschlag beabstandet sind, diese Anschläge im Bereich der zweiten oder der ersten Längshälfte mit einer quer zur Einstecklängsrichtung orientierten Spannkraft beaufschlagen.

Die mindestens zwei Verriegelungselemente können zweckmäßigerweise auch auf das Betätigungselement eine quer zur Einsteckrichtung orientierte Spannkraft ausüben. Beispielsweise umfasst die mindestens eine Spannfläche eine Anlagefläche des Führungskanals im Bereich der zweiten Längshälfte. Die mindestens zwei Verriegelungselemente klemmen in der Spannstellung das Betätigungselement, insbesondere den Verriegelungsbolzen, gegen die Anlagefläche. Beispielsweise wirken die Verriegelungselemente auf das Betätigungselement, z.B. auf einen Kopf des Betätigungselements. Das Betätigungselement, z.B. ein Verriegelungsbolzen, wird sozusagen in dem Führungskanal verklemmt oder verkeilt.

Die mindestens zwei in der ersten Längshälfte angeordneten Verriegelungselemente haben bezüglich des mindestens einen Träger-Anschlags im Wesentlichen den gleichen Spannweg. Dies ist beispielsweise dann der Fall, wenn der Längsabstand der mindestens zwei Verriegelungselemente zu demjenigen mindestens einen Träger-Anschlag gleich ist, der dem jeweiligen Verriegelungselement zugeordnet ist.

Zweckmäßigerweise umfasst die Verriegelungsanordnung mindestens ein Sicherungselement. Das Sicherungselement ist vorteilhaft im Bereich der zweiten Längshälfte, das mindestens eine Verriegelungselement im Bereich ersten Längshälfte angeordnet.

Das mindestens eine Sicherungselement greift in der Verriegelungsstellung der Verriegelungsanordnung zur Sicherung des Steckabschnitts gegen ein Ausziehen aus der Steckaufnahme in eine Ausnehmung an der Steckaufnahme ein. Das Sicherungselement ist allerdings entgegen der Steck-Längsrichtung zumindest im Wesentlichen wirkungslos, wenn die Verriegelungselemente in ihrer Spannstellung sind. Die Keilwirkung bzw.

Spannwirkung der zweckmäßigerweise in der ersten Längshälfte angeordneten Verriegelungselemente wird somit durch das Sicherungselement nicht beeinträchtigt.

Das mindestens eine Sicherungselement ist vorzugsweise durch das Betätigungselement vor den Außenumfang des Steckabschnitts in seine Sicherungsstellung verdrängbar. Das Betätigungselement wirkt somit auf die mindestens zwei Verriegelungselemente und zweckmäßigerweise simultan auf das Sicherungselement, wenn die Verriegelungseinrichtung in ihre Verriegelungsstellung verstellt wird. Das mindestens eine Sicherungselement ist zweckmäßigerweise symmetrisch zwischen den mindestens zwei Verriegelungselementen angeordnet. Die Verriegelungselemente und das Sicherungselement sind z.B. in der Art eines gleichschenkligen Dreiecks angeordnet. Wenn beispielsweise drei Elemente vorhanden sind, sind diese zweckmäßigerweise jeweils in einem Winkel von 120° zueinander angeordnet.

Vorteilhafterweise greifen das mindestens eine Sicherungselement und die mindestens zwei Verriegelungselemente in eine gemeinsame Ringnut der Aufnahmeanordnung ein. Das Sicherungselement ist jedoch bezogen auf die Einsteckrichtung vor den mindestens zwei Verriegelungselementen angeordnet, so dass in der Spannstellung die mindestens zwei Verriegelungselemente gegen eine Seitenwand der Ringnut gespannt sind, das mindestens eine Sicherungselement jedoch nicht.

Das mindestens eine Sicherungselement und die mindestens zwei Verriegelungselemente können auch in demselben Längsabstand zu dem Träger-Anschlag bzw. dem Halter-Anschlag sein, wenn die Aufnahmeanordnung eine Ausnehmung für das Sicherungselement aufweist, das einen größeren Längsabstand zu dem mindestens einen Träger-Anschlag und dem Halter-Anschlag hat als mindestens eine Ausnehmung, die den mindestens zwei Verriegelungselementen zugeordnet ist. Ferner ist es vorteilhaft, wenn das Sicherungselement von dem Betätigungselement weniger weit vor einen Außenumfang des Steckabschnitts verdrängt wird als die mindestens zwei Verriegelungselemente, um deren Spann- und Keilwirkung nicht zu verringern. Beispielsweise kann das Sicherungselement eine Kugel oder Walze mit einem kleineren Durchmesser sein als Kugeln oder Walzen, die die mindestens zwei Verriegelungselemente bilden.

Es ist auch möglich, dass den mindestens zwei Verriegelungselementen erste Schrägflächen und dem mindestens einen Sicherungselement eine zweite Schrägfläche, beispielsweise des Betätigungselements, zugeordnet sind, wobei die ersten Schrägflächen die mindestens zwei Verriegelungselemente weiter nach radial außen verdrängen als die zweite Schrägfläche.

Das das mindestens eine Verriegelungselement betätigende Betätigungselement ist vorteilhafterweise durch eine Hebelanordnung und/oder ein Getriebe oder dergleichen in die Verriegelungsstellung und/oder die Entriegelungsstellung bringbar. Besonders bevorzugt ist ein Zahngetriebe mit einem Zahnrad oder einer Umfangszahnung, das bzw. die mit einem Zahnstangenabschnitt des Betätigungselements kämmt.

Das Getriebe kann z.B. mit einem Handrad betätigbar sein. Besonders bevorzugt ist jedoch ein Betätigungshebel, der über ein Zahngetriebe mit dem Betätigungselement kraftgekoppelt ist. Es versteht sich, dass das Hebel-Bedienkonzept mit einer Kraftkopplung zwischen einem Schwenk-Betätigungshebel und Verriegelungselementen über ein Zahngetriebe bei der Halter- und der Träger-Verriegelungseinrichtung realisiert sein kann. Der Bediener sieht an der Stellung des Betätigungshebels, der vorteilhaft z.B. an einem am Haltearm angeordneten Lagergehäuse schwenkbar gelagert ist, jederzeit, in welcher Stellung sich das Betätigungselement befindet, und somit, ob die jeweilige Verriegelungsanordnung den Haltearm an dem fahrzeugseitigen Halter verriegelt oder nicht. Eine Schwenkbetätigung des Hebels überträgt sich zweckmäßigerweise gleichförmig auf das Betätigungselement.

Ein Betätigungshebel ist zur Betätigung von Verriegelungseinrichtungen zweier oder mehrerer Haltearme ausgestaltet, z.B. mittels einer Kopplungseinrichtung eine entfernte Verriegelungseinrichtung betätigt.

An einem Endbereich des Betätigungshebels ist zweckmäßigerweise ein Ritzelabschnitt angeordnet, der mit einem Zahnabschnitt an dem Betätigungselement kämmt. Es versteht sich, dass optional auch weitere Zahngetriebebauteile zwischen dem Betätigungshebel und dem Betätigungselement angeordnet sein können, z.B. Zahnräder. Neben dem Ritzelabschnitt können am gezahnten Endbereich des Betätigungshebels auch mindestens einer, zweckmäßigerweise zwei ungezahnte Bereiche vorhanden sein, die mit einem oder zwei ungezahnten Bereichen neben dem Zahnabschnitt des Betätigungselementes zusammenwirken. Es ist bevorzugt, dass stets der Ritzelabschnitt des Betätigungshebels mit dem Zahnabschnitt des Betätigungselements in Eingriff bleibt. Der Zahnabschnitt kann z.B. durch Ausfräsungen oder Umfangsnuten gebildet sein.

Zweckmäßigerweise ist bei der Träger- und/oder der Halter-Verriegelungseinrichtung eine Nachstelleinrichtung vorhanden, die ein eventuelles Spiel des mindestens einen Verriegelungselements ausgleicht. Die jeweilige Nachstelleinrichtung enthält beispielsweise eine Federanordnung und/oder ein pneumatisches Nachstellelement und/oder ein hydraulisches Nachstellelement und/oder ein elektrisches Nachstellelement.

Das Betätigungselement wird zweckmäßigerweise durch eine Federanordnung in der Verriegelungsstellung gehalten. Es versteht sich, dass auch weitere Sicherungselemente zum Sichern der Verriegelungsstellung möglich sind, beispielsweise kann eine Sicherungseinrichtung vorgesehen sein, die in der Haltestellung und/oder in der Freigabestellung eine Verstellung des Betätigungselements, z.B. des Verriegelungsbolzens, verhindert. Die Sicherungseinrichtung enthält beispielsweise einen Sicherungsbolzen, der quer zur Verstellrichtung des Betätigungselements in eine Ausnehmung an demselben eingreift. Der Sicherungsbolzen ist beispielsweise in Richtung seiner Sicherungsstellung federbelastet.

Zum Verschließen des Haltearmes zumindest im an dem Halter montierten Zustand des Haltearmes ist zweckmäßigerweise ein Schloss an demselben angeordnet. Das Schloss blockiert in seiner Schließstellung unmittelbar oder mittelbar beispielsweise das Betätigungselement. Das Schloss ist mit einem entlang einer Einsteckachse in das Schloss einsteckbaren Schlüssel betätigbar. Der Schlüssel ist vorteilhafterweise nur in der Schließstellung des Schlosses von dem Schloss entfernbar. Der Schlüssel hat zweckmäßigerweise eine kompakte Bedienhandhabe, die im in das Schloss eingesteckten Steckzustand des Schlüssels wenig vor das Schloss vorsteht. Die kompakte Bauweise der Bedienhandhabe verringert das Risiko, dass die Bedienhandhabe vom Bart des Schlüssels abbricht.

Eine vorteilhafte Variante der Erfindung sieht vor, dass die Bedienhandhabe quer zur Einsteckrichtung flach ist. Eine Stirnfläche der Bedienhandhabe, an der der Bart des Schlüssels angeordnet ist beziehungsweise von der der Bart absteht, liegt in dem Steckzustand des Schlüssels zumindest teilweise parallel nahe bei einer Stirnfläche des Schlosses angeordnet ist oder zumindest partiell daran an.

Zwischen der Halteranordnung bzw. dem Kraftfahrzeug und der Trägeranordnung ist vorzugsweise eine elektrische Verbindung herstellbar, beispielsweise zum Betreiben einer Beleuchtungseinrichtung an der Querträgeranordnung und/oder zum elektrischen Anschluss eines Anhängers, der an die Trägeranordnung ankuppelbar ist. Für die elektrischen Kontakte zwischen der Trägeranordnung und der Halteranordnung sind mehrere Kontaktprinzipien möglich, beispielsweise Steckkontakte und/oder Schleifkontakte.

Es ist möglich, beispielsweise durch eine Kabelverbindung und einen konventionellen Stecker eine elektrische Verbindung zwischen der Trägeranordnung und der Halteranordnung herzustellen. Besonders bevorzugt ist jedoch eine sozusagen automatische elektrische Verbindung zwischen der Trägeranordnung und der Halteranordnung, die im Zusammenhang mit dem Anstecken der Trägeranordnung und der Halteranordnung hergestellt wird. An einem oder mehreren der Haltearme ist eine elektrische Träger-Kontaktanordnung angeordnet, die mit einer korrespondierenden Halter-Kontaktanordnung beispielsweise mit Hilfe von Steckkontakten und/oder Schleifkontakten eine elektrische Verbindung eingeht. Die Träger-Kontakteinrichtung ist zweckmäßigerweise am Steckabschnitt des jeweiligen Haltearms, z.B. stirnseitig und/oder am Außenumfang, angeordnet und tritt in elektrischen Kontakt mit einer Halter-Kontakteinrichtung, die in der Steckaufnahme des jeweiligen Halters angeordnet ist, beispielsweise an einer Bodenseite oder einem Innenumfang des Halters. Die Kontakteinrichtungen können aber auch seitlich an dem Halter und der Halteanordnung angeordnet sein und beim Aneinanderstecken bzw. miteinander Verbinden des Halters und des Haltearms miteinander in Kontakt treten.

Nachfolgend wird ein Ausführungsbeispiel der Erfindung anhand der Zeichnung erläutert. Es zeigen:
- Figur 1: eine perspektivische Ansicht mit einem Heck eines Fahrzeugs, das mit einer erfindungsgemäßen Halteranordnung ausgestattet ist, sowie zwei alternativ an der Halteranordnung anordenbaren erfindungsgemäßen Trägeranordnungen,

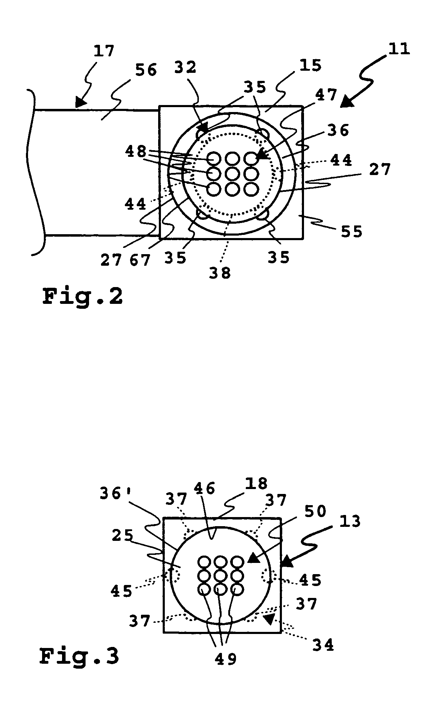

- Figur 2: eine teilweise schematische Frontalansicht eines Haltearms einer der Trägeranordnungen gemäß Figur 1, und
- Figur 3: eine teilweise schematische Frontalansicht eines Halters der Halteranordnung gemäß Figur 1.
- Figur 4: eine perspektivische Explosionsdarstellung eines Haltearms der Trägeranordnung gemäß Figur 1 schräg von oben,
- Figur 5: eine Querschnittsansicht eines in einen Halter eingesteckten Steckendes eines Haltearms der Trägeranordnung gemäß Figur 4, geschnitten entlang einer Linie II-II in entriegelter Stellung der Trägeranordnung, und
- Figur 6: eine Querschnittsansicht etwa entsprechend Figur 5, wobei die Trägeranordnung jedoch verriegelt ist.
- Figur 7: eine Seitenansicht einer Halter-Steckaufnahme und einer Verriegelungseinrichtung eines Haltearms gemäß einem alternativen Ausführungsbeispiel für eine Trägeranordnung entsprechend Figur 1,
- Figur 8: eine etwa entlang einer Schnittlinie A-A in Figur 7 teilweise geschnittene Draufsicht der Trägeranordnung gemäß Figur 7,
- Figur 9: eine teilweise etwa entlang einer Schnittlinie B-B in Figur 8 geschnittene Seitenansicht der Trägeranordnung gemäß Figuren 7, 8, und
- Figur 10: eine Teilansicht, etwa entsprechend einem Ausschnitt X in Figur 9, einer Variante des Ausführungsbeispiels gemäß Figuren 7, 8 und 9.

Bei einem Trägersystem 10 sind wahlweise Träger 11, 12 die jeweils erfindungsgemäße Trägeranordnungen bilden, an einer Halteranordnung 13 eines Kraftfahrzeugs 14, beispielsweise eines Personenkraftwagens, eines Vans oder eines Geländewagens, lösbar befestigbar. Die Träger 11, 12 haben eine U-förmige oder gabelartige Gestalt mit im Ausführungsbeispiel zwei Haltearmen 15, 16; 15', 16', zwischen denen Querträgeranordnungen 17; 17' angeordnet sind, die die beiden Haltearme 15, 16 bzw. 15', 16' miteinander verbinden. Die Haltearme 15, 16; 15', 16' sind an Haltern 18, 19 der Halteranordnung 13 befestigbar. Die Halter 18, 19 sind an Längsträgern 20, 21 einer Karosserie 22 des Kraftfahrzeugs 14 befestigt oder werden durch die Längsträger 20, 21 gebildet. Die Halter 18, 19 sind beispielsweise an die Karosserie 22 angeschweißt und/oder angeschraubt und/oder angeklebt und/oder angenietet oder in sonstiger Weise mit der Karosserie 22 verbunden. Wenn die Halter 18, 19 beispielsweise an die Karosserie 22 angeschraubt sind, sind sie leicht nachrüstbar.

Die Halter 18, 19 sind an einander entgegengesetzten Längsseiten 64, 65 des Kraftfahrzeugs 14 bzw. der Karosserie 22 angeordnet und somit relativ weit auseinanderliegend. Damit ist eine optimale Kraft- und Momentübertragung von den Haltearme 15, 16 auf die Halteranordnung 13 und das Kraftfahrzeug 14 möglich.

Die Querträgeranordnungen 17; 17' sind für unterschiedliche Nutzungsarten des Trägersystems 10 ausgestaltet. Der Träger 11 ist ein Träger zum Anhängen eines Anhängers an das Kraftfahrzeug 14. Der Träger 12 dient zum Auflegen einer Last, beispielsweise Fahrrädern, Koffern oder dergleichen. Die Querträgeranordnungen 17; 17' verlaufen in Fahrzeugquerrichtung des Kraftfahrzeugs 14 hinter dem Heck 23.

Die Halter 18, 19 sowie die Haltearme 15, 16; 15', 16' und die Querträgeranordnungen 17, 17' können aus einem Metallwerkstoff sein, beispielsweise Stahl, Leichtmetall oder dergleichen, oder aus einem Kunststoffmaterial, insbesondere aus einem faserverstärktem Kunststoff. Es versteht sich, dass auch ein Verbundwerkstoff aus Metall und Kunststoff bzw. verschiedenartigen Kunststoffen ohne weiteres für diese Komponenten möglich ist.

Das Trägersystem 10 ist als ein Stecksystem ausgestaltet, bei dem die Träger 11, 12 von der Rückseite bzw. vom Heck 23 des Kraftfahrzeugs 14 her an die Halter 18, 19 ansteckbar sind. Die Halter 18, 19 sind in Längserstreckungsrichtung 24 des Kraftfahrzeugs 14 orientiert. Die Halter 18, 19 haben Steckaufnahmen 25, 26, in die Steckabschnitte 27, 28 an den vorderen Bereichen der Haltearme 15, 16; 15', 16' einsteckbar sind. Die Steckaufnahmen 25, 26 haben einen Innenquerschnitt, der mit einem Außenquerschnitt der Steckabschnitte 27, 28 korreliert, beispielsweise einen kreisrunden oder, nicht dargestellt, einen polygonen Querschnitt. Die Steckaufnahmen 25, 26 sind zum Heck 23 hin offen.

Die Träger 11, 12 werden durch Öffnungen 29, 30 eines Heck-Stoßfängers 31 des Kraftfahrzeugs 14 hindurch in die Steckaufnahmen 25, 26 eingesteckt. Zwischen dem Heck-Stoßfänger 31 und der Karosserie 22 ist mindestens ein Prallelement 70 angeordnet.

Die Steckabschnitte 27, 28 sind zweckmäßigerweise im Wesentlichen im Formschluss mit den Steckaufnahmen 25, 26, so dass die Träger 11, 12 verhältnismäßig große Auflagekräfte und/oder Zugkräfte aufnehmen können. Die Steckabschnitte 27, 28 sind in ihrem vorderen Bereich 67 beispielsweise konisch, was das Einstecken in die Steckaufnahmen 25, 26 erleichtert.

Zur Verriegelung der Träger 11, 12 an der Halteranordnung 13 sind auf Seiten der Träger 11, 12 Träger-Verriegelungseinrichtungen 32, 33 und eine Halter-Verriegelungseinrichtung 34 der Halteranordnung 13 vorgesehen. In den vorderen Abschnitten 67 der Steckabschnitte 27, 28 sind Verriegelungselemente 35, beispielsweise Kugeln oder Bolzen, vorgesehen, die im verriegelten Zustand vor eine Außenkontur nach außen hin, beispielsweise über eine Umfangskontur 36 nach radial außen, vorstehen und in korrespondierende Halter-Verriegelungsaufnahmen 37 der Halter-Verriegelungseinrichtung 34 eingreifen. In diesem verriegelten Zustand werden die Verriegelungselemente 35 beispielsweise durch ein Betätigungselement 38, z.B. in Gestalt eines Stabes, gehalten. Das Betätigungselement 38 ist in einem Führungskanal 68 des Haltearms 15, 16 längsverschieblich geführt.

Das Betätigungselement 38 hat beispielsweise im Bereich der Verriegelungselemente 35 eine konische Gestalt und verdrängt die verriegelungselemente 35 nach außen hin, so dass sie in die Verriegelungsaufnahmen 37, beispielsweise ringförmige Nuten und/oder kalottenartige bzw. hohlkugelartige Ausnehmungen, eingreifen. Die Verriegelungsaufnahmen 37 sind an einer Innenkontur 46 der Steckaufnahmen 25, 26 ausgebildet.

Zum Entriegeln der Verriegelungseinrichtungen 32, 33 sind Betätigungshandhaben 39, 40 vorgesehen, die mit den Betätigungselementen 38 zusammenwirken. Die Betätigungshandhabe 39 ist beispielsweise ein Hebel, der zwischen einer mit durchgezogenen Linien gezeichneten Verriegelungsstellung und einer mit gestrichelten Linien gezeichneten Entriegelungsstellung schwenkbar an dem Haltearm 15, z.B. oben, angeordnet ist und auf das Betätigungselement 38 wirkt, um die Verriegelungseinrichtung 32 zu verriegeln oder zu entriegeln.

Auf das Betätigungselement 38 wirkt von hinten her eine Nachstelleinrichtung 41. Die Nachstelleinrichtung 41 umfasst beispielsweise eine Feder oder Federanordnung 170, die sich einerseits an einer Innenwand des Haltearms 15 und andererseits an dem Betätigungselement 38 abstützt und so das Betätigungselement 38 in Richtung einer Verriegelungsstellung betätigt. Die Federanordnung 170 stützt sich z.B. an einem Anschlag 171 des Haltearms 15 und einem Anschlag 187 des Betätigungselements 38 ab. In der Verriegelungsstellung drückt das Betätigungselement 38 die Verriegelungselemente 35, z.B. Kugeln 69, nach radial außen, um die Träger-Verriegelungseinrichtung 32 an der Halteranordnung 13 zu verriegeln.

Die Nachstelleinrichtung 41 bewirkt zugleich ein automatisches Verriegeln der Verriegelungseinrichtung 32 beim Einstecken des Trägers 11 in die Halteranordnung 13. Die Verriegelungselemente 35 schnappen sozusagen automatisch in die Verriegelungsaufnahme(n) 37 ein und verriegeln so den Träger 11 an der Halteranordnung 13. Lediglich zum Entriegeln betätigt ein Bediener das Betätigungselement 38.

Auch die Verriegelungseinrichtung 33 des Trägers 12 verriegelt selbsttätig beim Einstecken des Trägers 12 in die Halteranordnung 13. Zum Entriegeln ist die Betätigungshandhabe vorgesehen, beispielsweise ein Bedienknopf an einer Seitenfläche des Haltearms 15'. Am Haltearm 16' kann ebenfalls ein Bedienknopf oder eine sonstige Betätigungshandhabe, die in der Figur nicht sichtbar ist, vorgesehen sein.

Die Betätigungshandhabe 39 ist mit den Verriegelungselementen 35 am Haltearm 16 wirkverbunden, das heißt mit einer einzigen Betätigungshandhabe sind sowohl die Verriegelungselemente 35 des Haltearms 15 als auch die Verriegelungselemente 35 des Haltearms 16 verriegelbar und/oder entriegelbar.

Auch ein umgekehrtes Konzept ist möglich, bei dem beispielsweise die Träger-Verriegelungseinrichtung 32 am Außenumfang 36' der Arme 15 oder 16 Verriegelungsaufnahmen 44 aufweist, in die Halter-Verriegelungselemente 45 zum Verriegeln der Verriegelungseinrichtungen 32, 34 eingreifen. Die Verriegelungselemente 45 stehen im verriegelten Zustand nach innen vor die Innenkontur 46 der Steckaufnahmen 25, 26 vor. Die Träger-Verriegelungsaufnahmen 44 sind beispielsweise Nuten oder kugelartige Ausnehmungen an der Außenkontur, insbesondere der Umfangskontur 36 der Steckabschnitte 27, 28.

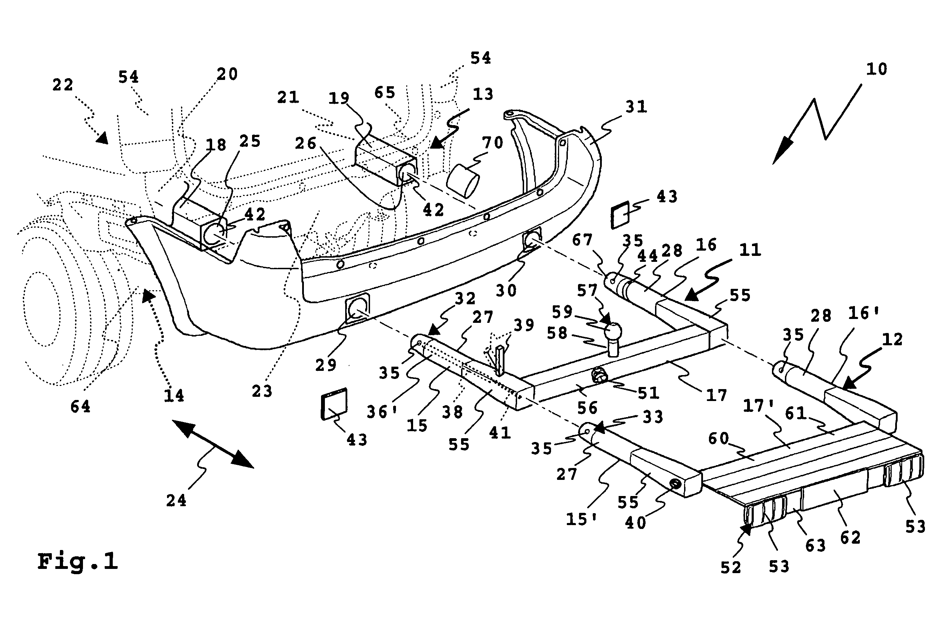

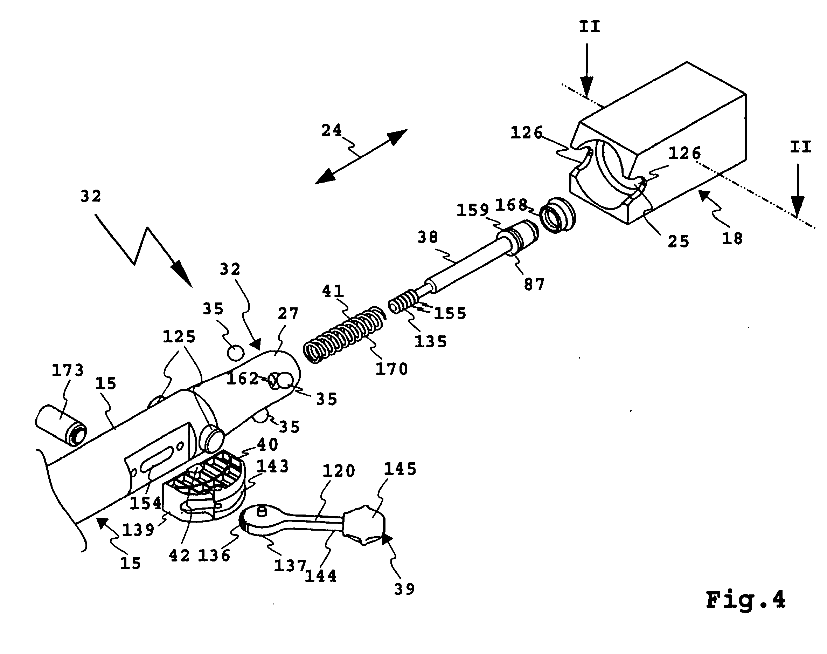

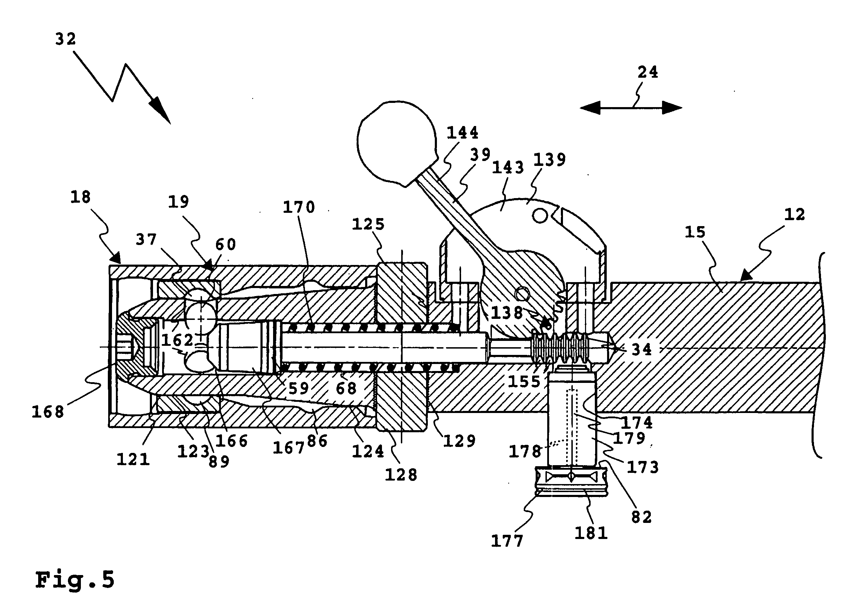

Ein detailliertes 1. Ausführungsbeispiel einer in Figur 1 schematisch dargestellten Träger-Verriegelungseinrichtung 32 wird nachfolgend anhand der Figuren 4-6 erläutert.

Die Verriegelungseinrichtung 32 ist mit einem an dem Haltearm 15 schwenkbar gelagerten Betätigungshebel 120 betätigbar. Der Betätigungshebel 120 ist an beziehungsweise in einem am Haltearm 15 angeordneten Lagergehäuse 139 schwenkbar gelagert. Ein Stangenteil 144 des Betätigungshebels 120 steht nach oben durch einen Längs-Schlitz 143 vor das Lagergehäuse 139 vor. An dem Stangenteil 144 ist ein Betätigungsknauf 145 angeordnet. An dem Lagergehäuse 139 können nicht dargestellte Verrastungsmittel und/oder Verriegelungsmittel für den Betätigungshebel 120 vorgesehen sein, z.B. Ausnehmungen, in die Rastvorsprünge, insbesondere elastische und/oder verschiebliche Rastvorsprünge, die beispielsweise seitlich an dem Betätigungshebel 120 angeordnet sein können, eingreifen. Das Lagergehäuse 139 ist z.B. an den Haltearm 15 angeschraubt. Der Betätigungshebel 120 greift durch einen Längsschlitz 154 in den Führungskanal 68 ein. Der Führungskanal 68 ist stirnseitig mit einem Verschlusselement 168, beispielsweise einer Verschlussschraube, verschlossen.

Vordere und hintere Stützflächen 121, 122 des Steckabschnitts 27 können an vorderen und hinteren Stützflächen 123, 124 der Steckaufnahme 25 insbesondere bei äußerer Belastung der Träger 11 oder 12 zur Anlage kommen. Der Steckabschnitt 27 ist jedoch so in die Steckaufnahme 25 eingesteckt, dass zwischen den Stützflächen 121, 123 und 122, 124 ein Abstand vorhanden ist. Nahe bei der hinteren Stützfläche 122 stehen Anschlagteile 125 seitlich vor den Außenumfang des Haltearms 15 vor, die in der Gebrauchsstellung des Haltearms 15 in Ausnehmungen 126 neben der Einstecköffnung der Steckaufnahme 25, 26 eingreifen. Zweckmäßigerweise sind die Anschlagteile 125 durch einen Querbolzen 128 gebildet, der in eine Bohrung 129 des Haltearms 15 quer zu dessen Längsrichtung 24 eingesteckt ist. Prinzipiell wäre es zwar möglich, den Querbolzen 128 durch Kleben, Schweißen oder Verschrauben in der Bohrung 129 zu fixieren. Der Querbolzen 128 kann mit einer Rändelung oder Riffelung versehen sein, die beim Einstecken in die Bohrung 129 zumindest teilweise gequetscht wird. Der Querbolzen 128 kann an seinem Außenumfang vorteilhaft auch glatt und in die Bohrung 129 eingepresst sein. Die Anschlagteile 125 stehen in der Gebrauchsstellung des Haltearms 15 horizontal vor den Außenumfang des Haltearms 15 vor.

Der Querbolzen 128 verläuft quer zu dem beispielsweise durch eine Bohrung hergestellten, in Längsrichtung 24 verlaufenden Führungskanal 68 zur Führung des Betätigungselements 38. Das stangenartige Betätigungselement 38, das man auch als Sperrbolzen oder Sperrwelle bezeichnen könnte, hat an einem dem Betätigungshebel 120 zugeordneten Zahnabschnitt 135, mit dem ein Ritzelabschnitt 136 an einem zweckmäßigerweise walzenförmigen Endbereich 137 des Betätigungshebels 120 kämmt. Der Ritzelabschnitt 136 und der Zahnabschnitt 135 gehören zu einem Zahngetriebe 138, über das der Betätigungshebel 120 mit dem Betätigungselement 38 kraftgekoppelt ist. Der untere Endbereich 137 des Betätigungshebels 120 ist als eine Art Betätigungszahnrad ausgestaltet, das heißt, der Ritzelabschnitt 136 verläuft entlang eines Kreisbogens. Der Zahnabschnitt 135 ist durch in Längsrichtung 24 äquidistant aneinander gereihte Umfangsnuten 155 gebildet.

Ein Verschwenken des Betätigungshebels 120 wird von dem Zahngetriebe 138 in eine Längsbewegung des Betätigungselementes 38 übersetzt. Ein Verschwenken zum Steckabschnitt 27 hin bewirkt eine Entrieglung der Verriegelungseinrichtung 32, wobei das Betätigungselement 38 vom Steckabschnitt 27 weg längsverstellt wird. Bei einer entgegengesetzten Schwenkbewegung des Betätigungshebels 120 wird das Betätigungselement 38 zum Steckabschnitt 27 hin längsverstellt und die Verriegelungseinrichtung 32 verriegelt. Dazu ist allerdings kein aktiver Bedienereingriff erforderlich, da die Nachstelleinrichtung 41 der Federanordnung 170 das Betätigungselement 38 zu seiner Verriegelungsstellung hin verstellt und die Verriegelungseinrichtung 32 automatisch verriegelt.

Ein an einem Stangenabschnitt des Betätigungselements 38 angeordneter Kopf 159 verdrängt in der Verriegelungsstellung die Verriegelungselemente 35 nach radial außen durch Bohrungen 162 hindurch vor eine Außenkontur des Haltearmes 15 beziehungsweise des Steckabschnitts 27 vor, sodass die Verriegelungselemente 35 in die Verriegelungsaufnahme 37, z.B. eine ringförmige Ausnehmung, oder Ringnut 164 des Halters 18 eingreifen. Die Bohrungen 162 sind so gestaltet, dass die Kugeln 69 beziehungsweise Verriegelungselemente 35 unverlierbar sind.

Wenn das Betätigungselement 38 in seine Verrieglungsstellung verstellt wird, verdrängt zunächst ein konischer Abschnitt 166 des Kopfs 159 mit einem größeren Konuswinkel die Kugeln/Verriegelungselemente 35 in die Bohrungen 162 hinein beziehungsweise vor die Außenkontur des Steckabschnitts 27 vor. Anschließend wirkt ein konischer Abschnitt 167 mit einem kleinen Konuswinkel auf die Verriegelungselemente 35. Dieser kleine Konuswinkel ermöglicht es, ein Spiel beziehungsweise eine Toleranz auszugleichen, die sich beispielsweise durch Verschleißerscheinungen ergeben. Der konische Abschnitt 167 mit dem kleinen Konuswinkel verdrängt die Verriegelungselemente 35, z.B. Kugeln oder Walzen, in ihre Verriegelungs-Endlage.

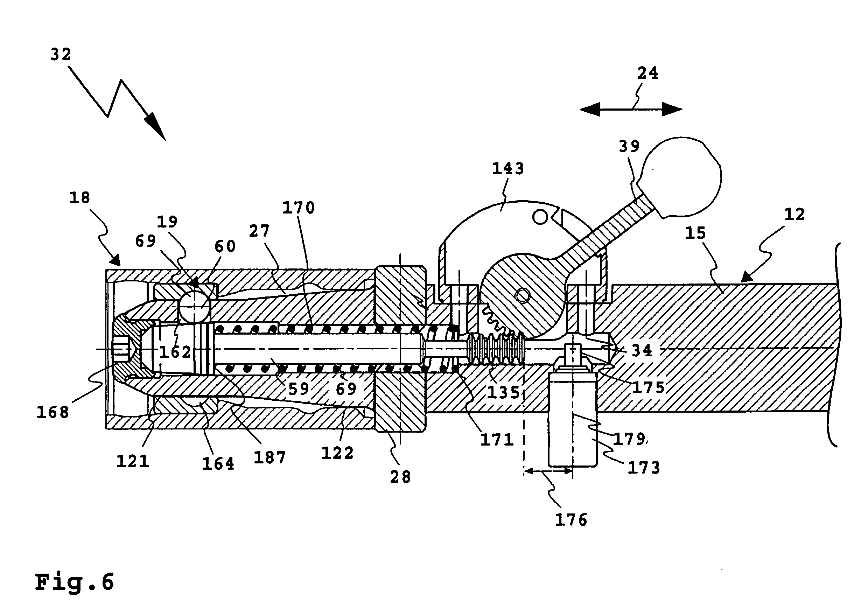

Der Haltearm 15 ist in seiner an dem Halter 18 montierten Stellung mit einem Schloss 173 verschließbar. Das Schloss 173 ist in einer Bohrung 174 des Haltearms 15 unverlierbar angeordnet. In der Schließstellung des Schlosses 173, die in Figur 6 gezeigt ist, steht ein Blockierteil 175 in den Führungskanal 68 vor, sodass ein Verstellen des Betätigungselements 38 in seine Entriegelungsstellung blockiert ist. Zwischen dem sich in Verriegelungsstellung befindlichen Betätigungselement 38 und dem Blockierteil 175 ist als ein Toleranzbereich ein Abstand 176 vorhanden, der unabhängig von Verschleißzustand der Verriegelungseinrichtung 32 ein Verschließen ermöglicht.

Das vorteilhaft an einer dem Betätigungshebel 120 entgegengesetzten Seite am Haltearm 15 angeordnete Schloss 173 ist mit einem Schlüssel 177 betätigbar beziehungsweise verschließbar, dessen Schlüsselbart 178 entlang einer Einsteckachse 179 in das Schloss 173 einsteckbar ist. Im eingesteckten Zustand steht eine vorteilhaft mit Symbolen und/oder Riffelungen versehenen Bedienhandhabe 181 des Schlüssels 177 das Schloss 173 vor. Solange das Blockierteil 175 in das Schloss 173 zumindest partiell zurückverstellt ist, kann der Schlüssel 177 nicht vom Schloss 173 abgezogen werden.

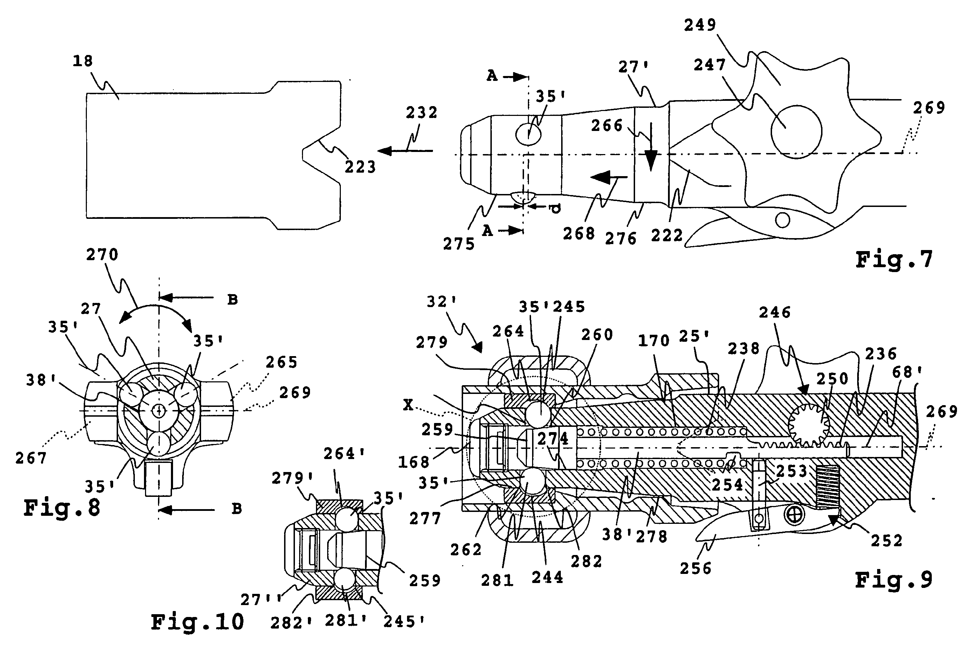

Bei der nachfolgend im Zusammenhang mit den Figuren 7-10 erläuterten Verriegelungseinrichtung 32' sind Komponenten gleich oder gleichartig, wie bei der Verriegelungseinrichtung 32, und daher nicht näher erläutert sowie teilweise mit einem Index versehen.

Im in die Steckaufnahme 25' gesteckten Zustand des Steckabschnitts 27' spannen Verriegelungselemente 35' der Verriegelungseinrichtung 32' z.B. v-förmige Träger-Anschläge 222 des Steckabschnitts 27', beispielsweise seitliche keilförmige Vorsprünge, gegen Halter- oder Steckaufnahme-Anschläge 223 des Halters 18, z.B. keilförmige Ausnehmungen. Schrägflächen 260 eines Kopfs 259 eines Betätigungselements 38' drücken Verriegelungselemente 35', die in Kanälen 262 geführt sind, nach radial außen, so dass die Verriegelungselemente 35', z.B. Kugeln oder Walzen, in eine Ringnut 264 eingreifen und den Steckabschnitt 27' in der Steckaufnahme 25' verspannen. Zwischen den Verriegelungselementen 35' und den Anschlägen 222, 223 ist ein Längsabstand bezüglich einer Einsteck-Längsrichtung 232 vorhanden.

Die Verriegelungselemente 35' sind in Umfangsrichtung 270 des Steckabschnitts 27' in einem Abstand zueinander angeordnet, z.B. in einem 60 Grad Winkel einer Längsachse 269. Die Längsachse 269 verläuft durch eine Schnittebene, die den Haltearm 15 mittig teilt.

Die Ringnut 264 hat vorteilhaft einen mittleren, flach verlaufenden Abschnitt 244, an den sich in Zeichnung nach rechts eine Einlaufschräge anschließt. Wenn der Verriegelungsbolzen 238 die Kugel-Verriegelungselemente 35' nach radial außen verdrängt, werden die Verriegelungselemente 35' gegen eine untere gerundete und/oder schräge Seitenwand 245 der Ringnut 264 gespannt. Die Seitenwand 245 bildet zweckmäßigerweise eine Schrägfläche.

Der Verriegelungsbolzen 238 kann mit einem Drehknebel 249 entriegelt werden, das an einer Drehwelle 247 eines Getriebes 246 angeordnet ist. Ein Zahnrad 250 an der am Haltearm 15 drehbar gelagerten Drehwelle 247 kämmt mit einem Zahnabschnitt 236 des Verriegelungsbolzens 238.

Zum Halten des Verriegelungsbolzens 238 in der Entriegelungsstellung ist eine Sicherungseinrichtung 252 mit einem Sicherungsbolzen 253 vorgesehen, der in seiner Sicherungsstellung in eine Ausnehmung 254 an dem Verriegelungsbolzen 238 eingreift. Der Sicherungsbolzen 253 ist mittels einer schwenkbar gelagerten, von außen betätigbaren Wippe 256 zwischen der Sicherungsstellung und einer Entriegelungsstellung betätigbar. Die Wippe 256 ist in Richtung der Sicherungsstellung federbelastet.

Die verriegelungselemente 35' sind in einer ersten Längshälfte 265 des Steckabschnitts 27' angeordnet. Diese asymmetrische Anordnung der Verriegelungselemente 35' an der ersten Längshälfte 265 bewirkt, dass die Verriegelungselemente 35' eine Spannkraft 266 quer zur Einsteck-Längsrichtung 232 auf Spannflächen, die insbesondere im Bereich einer zweiten Längshälfte 267 des Steckabschnitts 27' sind, ausüben. Ferner erzeugen die Verriegelungselemente 35' eine Spannkraft 268 in Steck-Längsrichtung 232. Somit wird der Steckabschnitt 27' in der Steckaufnahme 25' nicht nur in Steck-Längsrichtung 232 gespannt, sondern sozusagen verkeilt.

Die Verriegelungselemente 35' klemmen beispielsweise den Verriegelungsbolzen 238, z.B. dessen Kopf 259, gegen eine Anlagefläche 274 im Führungskanal 68'. Ferner klemmen die Verriegelungselemente 35' vorteilhaft Umfangsbereiche 275, 276 an der zweiten Längshälfte 267 gegen korrespondierende Aufnahmebereiche 277, 278 der Steckaufnahme 25'. Der Umfangsbereich 275 hat etwa dieselbe Längsposition an dem Steckabschnitt 27' wie die beiden Verriegelungselemente 35'. Der Aufnahmebereich 277 wird durch einen Lagerring 279 mit der Ringnut 264 gebildet. Zweckmäßig ist es, wenn die Verriegelungselemente 35' die Spannkraft 266 seitlich auf die Anschläge 222, 223 ausüben.

Es versteht sich, dass eine mittige und bei andersartigen Außenkonturen, insbesondere polygonen Außenkonturen, auch eine außermittige Teilung des jeweiligen Steckabschnitts in Längshälften möglich ist. Zweckmäßig ist allerdings, dass die Verriegelungselemente nicht gleichmäßig über den Außenumfang des jeweiligen Steckabschnitts verteilt sind, sondern in asymmetrischer Anordnung, so dass sie eine Querkraft oder Spannkraft auf einen den Verriegelungselementen entgegengesetzten Bereich, z.B. einen Umfangsbereich, des Steckabschnitts ausüben können.

Als eine zusätzliche Sicherungsmaßnahme ist ein Sicherungselement 281 vorgesehen, das in die Ringnut 264 und somit in eine Ausnehmung an der Steckaufnahme 25' eingreift. Beispielsweise bei einer anormalen Überbeanspruchung, z.B. einem Unfall, sichert das Sicherungselement 281 den Haltearm 15 zusätzlich zu den Verriegelungselementen 35' gegen ein gewaltsames Ausziehen aus der Steckaufnahme 25'. Wenn die Verriegelungselemente 35' jedoch normal wirksam sind und ihre Spannfunktion ausüben, ist das Sicherungselement 281 zumindest im Wesentlichen wirkungslos.

Das z.B. an der zweiten Längshälfte 267 angeordnete Sicherungselement 281 ist z.B. eine Kugel, die in einer Radial-Bohrung 282 geführt ist. Der Verriegelungsbolzen 238 verdrängt das Sicherungselement 281 in seiner Verriegelungsstellung nach radial außen vor den Außenumfang, so dass es in die Ringnut 264 eingreift. Dort liegt das Sicherungselement im flachen Abschnitt 244 und nicht an der unteren Seitenwand 245 an, wo es ansonsten eine Spannkraft ausüben würde. Das Sicherungselement 281 ist dazu beispielsweise um einen Abstand d weiter von den Anschlägen 222, 223 entfernt als die Verriegelungselemente 35'.

Bei einer in Figur 10 dargestellten Variante ist ein Sicherungselement 281' an einem Steckabschnitt 27'' etwa in derselben Längsposition bezüglich der Steck-Längsrichtung 232 wie die Verriegelungselemente 35' angeordnet, z.B. etwa im selben Abstand zu den Anschlägen 222, 223. Eine Ringnut 264' eines Lagerrings 279' hat im Gegensatz zu der Ringnut 264 keinen flachen Abschnitt 244. Das Sicherungselement 281' tritt jedoch aufgrund beispielsweise seines gegenüber den Verriegelungselementen 35' kleineren Durchmessers weniger weit als diese in die Ringnut 264' ein, so dass die Spann- und Keilwirkung der Verriegelungselemente 35' nicht geschwächt wird. Die Verriegelungselemente 35' sind in ihrer Spannstellung gegen eine untere gerundete und/oder schräge Seitenwand 245' der Ringnut 264' gespannt, das Sicherungselement 281' nicht. Bei außerordentlicher Gewalteinwirkung, z.B. einem Unfall, wenn die Verriegelungselemente 35' durch eine Zugbeanspruchung entgegen der Steck-Längsrichtung 232 (in der Zeichnung nach rechts) z.B. bereits in die Seitenwand 245' eindringen, sichert das Sicherungselement 281' zusätzlich gegen diese Zugbelastung. Eine Radial-Bohrung 282' für das Sicherungselement 281', das z.B. eine Kugel ist, hat einen kleineren Durchmesser als die Radial-Bohrung 282 bzw. die Kanäle 262, z.B. Bohrungen, für die Verriegelungselemente 35'.

Die Durchsteck-Öffnungen 29, 30 des in der Zeichnung vom Kraftfahrzeug 14 entfernten Zustand gezeigten Heck-Stoßfängers 31 fluchten mit Einstecköffnungen 42 der Halter 18, 19. Mit Hilfe von Abdeckeinrichtungen 43, beispielsweise Verdeckklappen oder dergleichen, sind die Öffnungen 29, 30 verschließbar. Damit werden zugleich die Einstecköffnungen 42 verschlossen, so dass die Steckaufnahmen 25, 26 nicht verschmutzen.

Zwischen den Einstecköffnungen 42 und den Durchsteck-Öffnungen 29, 30 können in der Zeichnung nicht dargestellte zweckmäßigerweise elastische Rohr-Elemente vorhanden sein. Diese Elemente sind bei einer Verformung oder Verlagerung des Heck-Stoßfängers 31 in Richtung der Karosserie 22 vorteilhafterweise verformbar. Es ist aber auch möglich, dass der Heck-Stoßfänger 31 an den vorderen Stirnseite bzw. den Randbereichen der Einstecköffnungen 42 anliegt.

Bei dem Einstecken der Träger 11, 12 in die Halteranordnung 13 wird gleichzeitig eine elektrische Verbindung zwischen den jeweiligen Trägern 11, 12 und der Halteranordnung 13 bzw. dem Kraftfahrzeug 14 hergestellt. An den Haltearmen 15, 15' sind stirnseitig elektrische Träger-Kontakteinrichtungen 47 mit Steckkontakten 48, z.B. Kontaktstiften, angeordnet, die beim Einstecken der Haltearme 15, 15' in den zugeordneten Halter 18 in elektrische Verbindung mit Steckkontakten 49, z.B. Steckbuchsen, einer Halter-Kontakteinrichtung 50 des Halters 18 gelangen. Die Halter-Kontakteinrichtung 50 ist am rückseitigen Boden des Halters 18 bzw. der Steckaufnahme 26 angeordnet. Es versteht sich, dass auch an der Umfangskontur der Steckabschnitte 27, 28 bzw. an der Innenkontur der Steckaufnahmen 25, 26 elektrische Kontakte, z.B. Schleifkontakte und/oder Federkontakte vorgesehen sein können, um eine elektrische Verbindung zwischen den Trägern 11, 12 und der Halteranordnung 13 herzustellen. Die elektrische Verbindung wird so auf einfache Weise hergestellt, ohne dass es einer zusätzlichen Bedienhandlung bedarf. Insbesondere ist es bei konventionellen Trägersystemen erforderlich, dass der Bediener einen Stecker in eine Steckaufnahme im hinteren unteren Bereich, beispielsweise unterhalb des Stoßfängers, eines konventionellen Kraftfahrzeugs einsteckt. Dort ist diese Steckaufnahme/Steckdose zudem anfällig gegenüber Verschmutzungen. Die Halter-Kontakteinrichtung 50 hingegen ist geschützt im hinteren Bereich des Halters angeordnet.

Von den Träger-Kontakteinrichtungen 47 führen elektrische Leitungen zu elektrischen Verbrauchern, beispielsweise einer Anhänger-Steckbuchse 51 beim Träger 11 bzw. einer Beleuchtungseinrichtung 52 des Trägers 12. In die Anhänger-Steckbuchse 51 kann ein zugeordneter elektrischer Stecker eines Anhängers für das Kraftfahrzeug 14 eingesteckt werden. Die Beleuchtungseinrichtung 52 enthält Leuchten 53, die die Funktion von Heckleuchten, Richtungsanzeigern, Bremsleuchten und dergleichen des Kraftfahrzeugs 14 übernehmen können. Die Beleuchtungseinrichtung 52 ist zusätzlich oder als Ersatz einer Heck-Beleuchtungseinrichtung 54 des Kraftfahrzeugs 14 betreibbar.

Im am Kraftfahrzeug 14 montierten Zustand stehen hintere Abschnitte 55 der Haltearme 15, 16; 15', 16' nach hinten vor den Heck-Stoßfänger 31 vor. Zwischen den hinteren Abschnitten 55 erstrecken sich die Querträgeranordnungen 17; 17'. Die hinteren Abschnitte 55 haben beispielsweise ein Vierkantprofil, die Steckabschnitte 27, 28 ein im Wesentlichen kreisrundes Profil.

Ein Querträger 56, beispielsweise ein Vierkantrohr, ein Rundrohr oder dergleichen, der Querträgeranordnung 17 verbindet die beiden hinteren Enden der Haltearme 15, 16. Vor den Querträger 56 steht nach oben hin eine Kupplung 57 mit einem Kupplungshals 58 vor, auf dem eine Kupplungskugel 59 zum Ankuppeln eines Anhängers angeordnet ist. Die Anhänger-Steckbuchse 51 ist ebenfalls an dem Querträger 56 angeordnet, beispielsweise hinten.

Der Träger 12 ist als ein Last-Träger ausgestaltet. Die Querträgeranordnung 17' enthält eine Ablageplatte 60, die die Haltearme 15', 16' miteinander verbindet. Unterhalb der Ablageplatte 60 kann ein in der Figur nicht dargestellter Querträger in der Art des Querträgers 56 angeordnet sein. Die Ablageplatte 60 stellt eine im Wesentlichen horizontale Auflagefläche 61 zum Ablegen und Transportieren von Gegenständen bereit. Auf der Auflagefläche 61 kann, in der Figur nicht dargestellt, beispielsweise eine Transportbox fest oder entfernbar angeordnet sein. Auf der Ablageplatte 60 können auch weitere Haltevorrichtungen, beispielsweise ein Fahrradhalter, ein Trägergestell oder dergleichen befestigt sein. Zugleich kann die Ablageplatte 60 als eine Art Trittbrett dienen.

Die Leuchten 53 sowie ein Kennzeichenträger 62 zwischen den Leuchten 53 sind an einem horizontalen Träger 63, beispielsweise einem nach unten abgewinkelten Bereich der Ablageplatte 60 hinten am Träger 12 angeordnet.

## Patentansprüche

1. Trägeranordnung für ein Kraftfahrzeug (14) , insbesondere einen Personenkraftwagen oder ein leichtes Nutzfahrzeug, die im Heckbereich des Kraftfahrzeugs (14) zum Halten einer Last anordenbar ist, mit einer gabelartigen Gestalt mit mindestens zwei Haltearmen (15, 16; 15', 16'), die einen im montierten Zustand horizontalen Abstand zueinander haben und durch eine Querträgeranordnung (17; 17') miteinander verbunden sind, wobei die Haltearme (15, 16; 15', 1ö6') an Haltern (18, 19) einer Halteranordnung (13) lösbar befestigbar sind, wobei die Halter (18, 19) an einander entgegengesetzten Längsseiten (64, 65) des Kraftfahrzeugs im Heckbereich an einer Karosserie (22) des Kraftfahrzeugs angeordnet sind, wobei im montierten Zustand die Haltearme zumindest im Bereich der Halter (18, 19) im wesentlichen in Längserstreckungsrichtung (24) des Kraftfahrzeugs (14) verlaufen und die Querträgeranordnung (17; 17') hinter dem Heck (23) , insbesondere hinter einem Heck-Stoßfänger (31), des Kraftfahrzeugs angeordnet ist, wobei die Haltearme (15, 16; 15', 16') Steckabschnitte (27, 28) haben, die an und/oder in Steckaufnahmen (25, 26) der Halter (18, 19) steckbar sind, und wobei sie eine Träger-Verriegelungseinrichtung (32; 32'; 33) zur Verriegelung an den Haltern (18, 19) aufweist, die eine Betätigungshandhabe (39, 40) zum Verriegeln und/oder zum Entriegeln umfasst, wobei die Träger-Verriegelungseinrichtung (32; 32'; 33) mindestens ein Verriegelungselement (35) umfasst, das im an den Haltern (18, 19) verriegelten Zustand vor eine Außenkontur (36) der Haltearme (15, 16; 15', 16') vorsteht und in eine Halter-Verriegelungsaufnahme (37) an einem jeweiligen Halter (18, 19) eingreift, **dadurch gekennzeichnet, dass** mit der Betätigungshandhabe (39, 40) die Verriegelungselemente (35) beider Haltearme (15, 16) verriegelbar und/oder entriegelbar sind, so dass mit einer einzigen Betätigungshandhabe die Verriegelungselemente (35) beider Haltearme (15, 16) verriegelbar und/oder entriegelbar sind.

2. Trägeranordnung nach Anspruch 1, **dadurch gekennzeichnet, dass** die Haltearme (15, 16; 15', 16') durch hintere Öffnungen (29,30) an dem Heck-Stoßfänger (31) hindurch in und/oder an die Halter (18, 19) steckbar sind.

3. Trägeranordnung nach einem der vorhergehenden Ansprüche, **dadurch gekennzeichnet, dass** die Träger-Verriegelungseinrichtung (32; 32'; 33) mindestens eine Träger-Verriegelungsaufnahme (44) aufweist, in die im verriegelten Zustand ein Halter-Verriegelungselement (45) des Halters (18, 19) eingreift.

4. Trägeranordnung nach einem der vorhergehenden Ansprüche, **dadurch gekennzeichnet, dass** die Träger-Verriegelungseinrichtung (32; 32'; 33) sich beim Stecken der Haltearme (15, 16; 15', 16') an und/oder in die Halter (18, 19) an den Haltern (18, 19) selbsttätig verriegelt.

5. Trägeranordnung nach einem der vorhergehenden Ansprüche, **dadurch gekennzeichnet, dass** das mindestens eine Verriegelungselement (35), einen Verriegelungsbolzen und/oder eine Verriegelungskugel umfasst.

6. Trägeranordnung nach einem der vorhergehenden Ansprüche, **dadurch gekennzeichnet, dass** die Verriegelungseinrichtung (32; 32'; 33) mindestens zwei Verriegelungselemente (35) aufweist, die in ihrer Spannstellung quer zur Steck-Längsrichtung (232) eines jeweiligen Steckabschnitts (27) einander entgegengesetzte Spannkräfte ausüben.

7. Trägeranordnung nach Anspruch 6 , **dadurch gekennzeichnet, dass** Winkelabstände zwischen den mindestens zwei Verriegelungselementen (35) im wesentlichen gleich sind, insbesondere dass die Verriegelungselemente (35) einander entgegengesetzt oder an Eckbereichen eines gleichseitigen Polygons angeordnet sind.

8. Trägeranordnung nach einem der vorhergehenden Ansprüche, **dadurch gekennzeichnet, dass** das mindestens eine Verriegelungselement (35') an einer an einer ersten Längshälfte (265) eines Steckabschnitts (27') der Trägeranordnung angeordnet ist, dass an der zweiten Längshälfte (267) kein Verriegelungselement angeordnet ist, und dass das mindestens eine Verriegelungselement (35) in seiner Spannstellung eine Spannkraft quer zur Steck-Längsrichtung (232) auf mindestens eine Spannfläche eines jeweiligen Steckabschnitts (27') ausübt.

9. Trägeranordnung nach Anspruch 8, **dadurch gekennzeichnet, dass** mindestens zwei Verriegelungselemente (35') in einer Spannstellung mindestens einen bezüglich der Steck-Längsrichtung (232) von den mindestens zwei Verriegelungselementen (35') entfernt angeordneten Träger-Anschlag (222) gegen mindestens einen Halter-Anschlag (223) eines Halters (18, 19) spannen, dass die mindestens zwei Verriegelungselemente (35') an einer ersten Längshälfte (265) eines Steckabschnitts (27') der Trägeranordnung und in Umfangsrichtung des Steckabschnitts (27') in einem Abstand zueinander angeordnet sind, und dass die mindestens zwei Verriegelungselemente (35') in der Spannstellung eine Spannkraft quer zur Steck-Längsrichtung (232) auf mindestens eine Spannfläche des Steckabschnitts (27') ausüben.

10. Trägeranordnung nach Anspruch 8 oder 9, **dadurch gekennzeichnet, dass** die mindestens eine Spannfläche an einer zweiten Längshälfte (267) des Steckabschnitts (27') angeordnet ist.

11. Trägeranordnung nach einem der vorhergehenden Ansprüche, **dadurch gekennzeichnet, dass** die Träger-Verriegelungsreinrichtung (32; 32'; 33) eine Nachstelleinrichtung (41) zum Ausgleich eines Spiels des mindestens einen Träger-Verriegelungselements (35) aufweist.

12. Trägeranordnung nach einem der vorhergehenden Ansprüche, **dadurch gekennzeichnet, dass** die Träger-Verriegelungseinrichtung (32; 32'; 33) einen schwenkbar gelagerten Betätigungshebel (120) zum Betätigen eines Betätigungselements (38) enthält, das in einer Längsrichtung an dem Haltearm geführt zwischen einer Entriegelungsstellung und einer Verriegelungsstellung verstellbar ist und in der Verriegelungsstellung mindestens ein Verriegelungselement (35) des Haltearms in eine mit einer zugeordneten Verriegelungseinrichtung des fahrzeugseitigen Halters verriegelt, und dass der Betätigungshebel (120) über ein Zahngetriebe (138) mit dem Betätigungselement (38) kraftgekoppelt ist.

13. Trägeranordnung nach einem der vorhergehenden Ansprüche, **dadurch gekennzeichnet, dass** zur Versorgung der Trägeranordnung (11, 12) und/oder eines an sie angehängten Anhängers mit elektrischem Strom an mindestens einem der Haltearme (15, 16; 15', 16') eine elektrische Träger-Kontakteinrichtung (47) angeordnet ist, die mit einer elektrischen Halter-Kontakteinrichtung an dem Kraftfahrzeug (14) elektrisch verbindbar ist.

14. Trägeranordnung nach einem der vorhergehenden Ansprüche, **dadurch gekennzeichnet, dass** an der Querträgeranordnung (17; 17') eine Kupplung mit einer an einem Kupplungshals angeordneten Kupplungskugel zum Anhängen eines Anhängers an den Kraftfahrzeug (14) angeordnet oder anordenbar ist und/oder dass die Querträgeranordnung (17; 17') eine im wesentlichen horizontale Auflagefläche (61) zum Ablegen und Transportieren von Gegenständen und/oder mindestens einen Fahrrad-Halter und/oder einen Transport-Behälter und/oder eine Trägergestellanordnung und/oder eine Trittbrettanordnung aufweist.

15. System mit einer Trägeranordnung nach einem der vorhergehenden Ansprüche, wobei das System die Halteranordnung (13) zur Anordnung an dem Kraftfahrzeug (14) umfasst.

16. System nach Anspruch 15, **dadurch gekennzeichnet, dass** die Halter der Halteranordnung (13) im Bereich von Längsträgern (20, 21) und/oder von Pralltöpfen der Karosserie anordenbar sind.

17. System nach Anspruch 15 oder 16, **dadurch gekennzeichnet, dass** die Halter (18, 19) der Halteranordnung (13) im montierten Zustand im wesentlichen zum Heck des Kraftfahrzeugs (14) hin orientierte Steckaufnahmen (25, 26) zum Stecken der Haltearme (15, 16; 15', 16') aufweisen.

18. System nach einem der Ansprüche 15 bis 17, **dadurch gekennzeichnet, dass** die Halteranordnung (13) eine Halter-Verriegelungseinrichtung (34) zur Verriegelung der Trägeranordnung, insbesondere der Haltearme, aufweist.

19. System nach Anspruch 18, **dadurch gekennzeichnet, dass** die Halter-Verriegelungsreinrichtung mindestens eine Halter-Verriegelungsaufnahme (37) aufweist, in die ein Träger-Verriegelungselement (35) der Trägeranordnung im verriegelten Zustand eingreift und/oder die Halter-Verriegelungsreinrichtung mindestens ein Halter-Verriegelungselement (45), insbesondere einen Verriegelungsbolzen und/oder eine Verriegelungskugel, aufweist, die im verriegelten Zustand in eine Halter-Verriegelungsaufnahme (37) an einem jeweiligen Haltearm (15, 16; 15', 16'), insbesondere an der Umfangskontur des Haltearms, eingreift.

20. System nach Anspruch 18 oder 19, **dadurch gekennzeichnet, dass** die Halter-Verriegelungsreinrichtung eine Nachstelleinrichtung zum Ausgleich eines Spiels des mindestens einen Halter-Verriegelungselements (45) aufweist.

21. System nach einem der Ansprüche 15 bis 20, **dadurch gekennzeichnet, dass** zur Versorgung der Trägeranordnung (11, 12) und/oder eines an sie angehängten Anhängers mit elektrischem Strom an mindestens einem der Halter der Halteranordnung (13) eine elektrische Halter-Kontakteinrichtung (50) angeordnet ist, die mit einer elektrische Träger-Kontakteinrichtung (47) der Trägeranordnung elektrisch verbindbar ist.

22. System nach Anspruch 21, **dadurch gekennzeichnet, dass** die Halter-Kontakteinrichtung (50) in einer Steckaufnahme (25, 26) des jeweiligen Halters (18, 19) angeordnet ist.

23. Kraftfahrzeug mit einem System nach einem der Ansprüche 15 bis 22.

24. Kraftfahrzeug nach Anspruch 23, **dadurch gekennzeichnet, dass** zwischen der Karosserie (22) und dem Heck-Stoßfänger (31) mindestens ein energieabsorbierendes, insbesondere elastisches, Prallelement (70) angeordnet ist.

25. Kraftfahrzeug nach Anspruch 23 oder 24, **dadurch gekennzeichnet, dass** die Halter (18, 19) einen integralen Bestandteil von Längsträgern (20, 21) und/oder von Pralltöpfen des Kraftfahrzeugs (14) sind.

## Claims

1. Carrier arrangement for a motor vehicle (14), in particular for a car or a light commercial vehicle, which can be arranged in the rear region of the vehicle (14) to hold a load and which has a forked shape with at least two supporting arms (15, 16; 15', 16') which in the assembled state have a horizontal distance from each other and are connected to each other by a crossmember arrangement (17; 17'), wherein the supporting arms (15, 16; 15', 16') can be releasably secured to holders (18, 19) of a holder arrangement (13), wherein the holders (18, 19) are arranged on opposite long sides (64, 65) of the motor vehicle in the rear region on a body part (22) of the motor vehicle, wherein in the assembled state the supporting arms extend substantially in the longitudinal direction (24) of the motor vehicle (14) at least in the region of the holders (18, 19) and the crossmember arrangement (17; 17') is arranged behind the rear end (23), in particular behind a rear bumper (31), of the motor vehicle, wherein the supporting arms (15, 16; 15', 16') have plug-in sections (27, 28) for fitting to and/or into plug-in receptacles (25, 26) of the holders (18, 19), and wherein the carrier arrangement comprises a carrier locking device (32; 32'; 33) for locking on the holders (18, 19), which comprises an operating handle (39, 40) for locking and/or unlocking, wherein the carrier locking device (32; 32'; 33) comprises at least one locking element (35) which, when locked on the holders (18, 19), projects in front of an external contour (36) of the supporting arms (15, 16; 15', 16') and engages a holder locking receptacle (37) on a respective holder (18, 19), **characterised in that** the locking elements (35) of the two supporting arms (15, 16) can be locked and/or unlocked with the operating handle (39, 40), so that the locking elements (35) of the two supporting arms (15, 16) can be locked and/or unlocked using a single operating handle.

2. Carrier arrangement according to claim 1, **characterised in that** the supporting arms (15, 16; 15', 16') can be plugged through rear openings (29, 30) in the rear bumper (31) into and/or onto the holders (18, 19).

3. Carrier arrangement according to any of the preceding claims, **characterised in that** the carrier locking device (32; 32'; 33) comprises at least one carrier locking receptacle (44) which is engaged by a carrier locking element (45) of the holder (18, 19) in the locked state.

4. Carrier arrangement according to any of the preceding claims, **characterised in that** the carrier locking device (32; 32'; 33) automatically locks on the holders (18, 19) as the supporting arms (15, 16; 15', 16') are plugged into and/or onto the holders (18, 19).

5. Carrier arrangement according to any of the preceding claims, **characterised in that** the at least one locking element (35) comprises a locking pin and/or a locking ball.

6. Carrier arrangement according to any of the preceding claims, **characterised in that** the locking device (32; 32'; 33) comprises at least two locking elements (35) which in their clamping position apply opposing clamping forces at right angles to the plug-in longitudinal direction (232) of a respective plug-in section (27).

7. Carrier arrangement according to claim 6, **characterised in that** the angular distances between the at least two locking elements (35) are substantially equal, and in particular **in that** the locking elements (35) are arranged opposite each other or in the corner regions of an equilateral polygon.

8. Carrier arrangement according to any of the preceding claims, **characterised in that** the at least one locking element (35') is arranged on a first longitudinal half (265) of a plug-in section (27') of the carrier arrangement, **in that** no locking element is provided on the second longitudinal half (267), and **in that** the at least one locking element (35) applies in its clamping position a clamping force at right angles to the plug-in longitudinal direction (232) to at least one clamping surface of a respective plug-in section (27').

9. Carrier arrangement according to claim 8, **characterised in that** at least two locking elements (35') clamp in a clamping position at least one carrier stop (222) which is arranged at a distance from the at least two locking elements (35') with respect to the plug-in longitudinal direction (232) against at least one holder stop (223) of a holder (18, 19), **in that** the at least two locking elements (35') are arranged at a distance from each other on a first longitudinal half (265) of a plug-in section (27') of the carrier arrangement and in the circumferential direction of the plug-in section (27'), and **in that** the at least two locking elements (35') apply in the clamping position a clamping force at right angles to the plug-in longitudinal direction (232) to at least one clamping surface of a plug-in section (27').

10. Carrier arrangement according to claim 8 or 9, **characterised in that** the at least one clamping surface is arranged on a second longitudinal half (267) of the plug-in section (27').

11. Carrier arrangement according to any of the preceding claims, **characterised in that** the carrier locking device (32; 32'; 33) comprises an adjusting device (41) to compensate for a play of the at least one carrier locking element (35).

12. Carrier arrangement according to any of the preceding claims, **characterised in that** the carrier locking device (32; 32'; 33) comprises a pivotably mounted operating lever (120) for operating an actuating element (38) which is adjustably guided in the longitudinal direction on the supporting arm between an unlocked position and a locking position and which in the locking position locks at least one locking element (35) of the supporting arm against an associated locking device of the vehicle-mounted holder, and **in that** the operating lever (120) is non- positively coupled to the actuating element (38) via a gearing arrangement (138).

13. Carrier arrangement according to any of the preceding claims, **characterised in that**, for supplying the carrier arrangement (11, 12) and/or a trailer coupled thereto with electric current, at least one of the supporting arms (15, 16; 15', 16') is provided with an electric carrier contact device (47) which can be electrically connected to an electric holder contact device on the motor vehicle (14).

14. Carrier arrangement according to any of the preceding claims, **characterised in that** a coupling with a hitch ball located on a coupling neck for coupling a trailer to the motor vehicle (14) is or can be provided on the crossmember arrangement (17, 17'), and/or **in that** the crossmember arrangement (17, 17') comprises a substantially horizontal supporting surface (61) for depositing and transporting objects and/or at least one bicycle carrier and/or a transport container and/or a carrier rack arrangement and/or a running board arrangement.

15. System comprising a carrier arrangement according to any of the preceding claims, wherein the system comprises the holder arrangement (13) for fitting to the motor vehicle (14).

16. System according to claim 15, **characterised in that** the holders of the holder arrangement (13) can be arranged in the region of side members (20, 21) and/or of impact absorbers of the vehicle body.

17. System according to claim 15 or 16, **characterised in that** the holders (18, 19) of the holder arrangement (13) have in the assembled state plug-in receptacles (25, 26) which are substantially oriented towards the rear end of the motor vehicle (14) for plugging the supporting arms (15, 16; 15', 16').

18. System according to any of claims 15 to 17, **characterised in that** the holder arrangement (13) comprises a holder locking device (34) for locking the carrier arrangement, in particular the supporting arms.

19. System according to claim 18, **characterised in that** the holder locking device comprises at least one holder locking receptacle (37) which in the locked state is engaged by a carrier locking element (35) of the carrier arrangement, and/or **in that** the holder locking device comprises at least one holder locking element (45), in particular a locking pin and/or a locking ball, which in the locked state engages a holder locking receptacle (37) on a respective supporting arm (15, 16; 15', 16'), in particular on the circumferential contour of the supporting arm.

20. System according to claim 18 or 19, **characterised in that** the holder locking device comprises an adjusting device to compensate for a play of the at least one carrier locking element (35).

21. System according to any of claims 15 to 20, **characterised in that**, for supplying the carrier arrangement (11, 12) and/or a trailer coupled thereto with electric current, at least one of the holders of the holder arrangement (13) is provided with an electric holder contact device (50) which can be electrically connected to an electric carrier contact device (47) of the carrier arrangement.

22. System according to claim 21, **characterised in that** the holder contact device (50) is located in a socket (25, 26) of the respective holder (18, 19).

23. Motor vehicle comprising a system according to any of claims 15 to 22.

24. Motor vehicle according to claim 23, **characterised in that** at least one energy-absorbing, in particular elastic, impact cushion (70) is provided between the vehicle body (22) and the rear bumper (31).

25. Motor vehicle according to claim 23 or 24, **characterised in that** the holders (18, 19) are an integral part of side members (20, 21) and/or of impact cushions of the motor vehicle (14).

## Revendications

1. Structure de support pour un véhicule automobile (14), en particulier une voiture particulière ou un utilitaire léger, qui peut être agencée dans la zone arrière du véhicule automobile (14) afin de porter une charge, avec une forme de fourche présentant au moins deux bras de retenue (15, 16 ; 15', 16') qui ont un écartement horizontal à l'état monté l'un par rapport à l'autre et sont reliés entre eux par un ensemble de traverses (17 ; 17'), sachant que les bras de retenue (15, 16 ; 15', 16') peuvent être fixés de manière amovible sur des appuis (18, 19) d'un ensemble d'appuis (13), sachant que les appuis (18, 19) sont agencés sur des côtés longitudinaux opposés (64, 65) du véhicule automobile dans la zone arrière sur une carrosserie (22) du véhicule automobile, sachant que les bras de retenue s'étendent, à l'état monté, au moins dans la zone des appuis (18, 19) sensiblement dans le sens d'extension longitudinale (24) du véhicule automobile (14) et l'ensemble de traverses (17, 17') est agencé derrière l'arrière (23), en particulier derrière un pare-chocs arrière (31) du véhicule automobile, sachant que les bras de retenue (15, 16 ; 15', 16') présentent des sections enfichables (27, 28) qui peuvent être enfichées sur et/ou dans des logements à enfichage (25, 26) des appuis (18, 19), et sachant que celle-ci présente un dispositif de verrouillage de support (32 ; 32' ; 33) pour le verrouillage sur les appuis (18, 19) qui comporte une manette d'actionnement (39, 40) pour le verrouillage et/ou le déverrouillage, sachant que le dispositif de verrouillage de support (32 ; 32', 33) comporte au moins un élément de verrouillage (35) qui dépasse, à l'état verrouillé sur les appuis (18, 19), d'un contour extérieur (36) des bras de retenue (15, 16 ; 15', 16') et s'engage dans un logement de verrouillage d'appui (37) sur un appui respectif (18, 19), **caractérisée en ce que** les éléments de verrouillage (35) des deux bras de retenue (15, 16) peuvent être verrouillés et/ou déverrouillés avec la manette d'actionnement (39, 40) de sorte à pouvoir être verrouillés et/ou déverrouillés avec une seule manette d'actionnement.

2. Structure de support selon la revendication 1, **caractérisée en ce que** les bras de retenue (15, 16 ; 15', 16') peuvent être enfichés par des ouvertures arrière (29, 30) sur le pare-chocs arrière (31) et/ou sur les appuis (18, 19).

3. Structure de support selon l'une quelconque des revendications précédentes, **caractérisée en ce que** le dispositif de verrouillage de support (32 ; 32' ; 33) présente au moins un logement de verrouillage de support (44), dans lequel un élément de verrouillage (45) de l'appui (18, 19) s'engage à l'état verrouillé.

4. Structure de support selon l'une quelconque des revendications précédentes, **caractérisée en ce que** le dispositif de verrouillage de support (32 ; 32' ; 33) se verrouille automatiquement sur les appuis (18, 19) lors de l'enfichage des bras de retenue (15, 16 ; 15', 16') sur et/ou dans les appuis (18, 19).

5. Structure de support selon l'une quelconque des revendications précédentes, **caractérisée en ce qu'**au moins un élément de verrouillage (35) comporte un boulon de verrouillage et/ou une sphère de verrouillage.

6. Structure de support selon l'une quelconque des revendications précédentes, **caractérisée en ce que** le dispositif de verrouillage (32 ; 32' ; 33) présente au moins deux éléments de verrouillage (35) qui exercent des forces de serrage opposées dans leur position de serrage transversalement au sens longitudinal d'enfichage (232) d'une section enfichable respective (27).

7. Structure de support selon la revendication 6, **caractérisée en ce que** des distances angulaires sont sensiblement identiques entre au moins deux éléments de verrouillage (35), en particulier **en ce que** les éléments de verrouillage (35) sont agencés à l'opposé ou sur des zones angulaires d'un polygone équilatéral.

8. Structure de support selon l'une quelconque des revendications précédentes, **caractérisée en ce qu'**au moins un élément de verrouillage (35') est agencé sur une première moitié longitudinale (265) d'une section enfichable (27') de la structure de support, **en ce qu'**aucun élément de verrouillage n'est agencé sur la seconde moitié longitudinale (267), et **en ce qu'**au moins un élément de verrouillage (35) dans sa position de serrage exerce une force de serrage transversalement au sens longitudinal d'enfichage (232) sur au moins une surface de serrage d'une section enfichable respective (27').

9. Structure de support selon la revendication 8, **caractérisée en ce qu'**au moins deux éléments de verrouillage (35') serrent, dans une position de serrage, au moins une butée de support (222) agencée à distance par rapport au sens longitudinal d'enfichage (232) d'au moins deux éléments de verrouillage (35') contre au moins une butée (223) d'un appui (18, 19), **en ce qu'**au moins deux éléments de verrouillage (35') sont agencés à une distance l'un par rapport à l'autre sur une première moitié longitudinale (265) d'une section enfichable (27') de la structure de support et dans le sens périphérique de la section enfichable (27'), et **en ce qu'**au moins deux éléments de verrouillage (35') exercent, dans la position de serrage, une force de serrage transversalement au sens longitudinal d'enfichage (232) sur au moins une surface de serrage de la section enfichable (27').

10. Structure de support selon la revendication 8 ou 9, **caractérisée en ce qu'**au moins une surface de serrage est agencée sur une seconde moitié longitudinale (267) de la section enfichable (27').

11. Structure de support selon l'une quelconque des revendications précédentes, **caractérisée en ce que** le dispositif de verrouillage de support (32 ; 32' ; 33) présente un dispositif d'ajustage (41) destiné à compenser un jeu d'au moins un élément de verrouillage de support (35).

12. Structure de support selon l'une quelconque des revendications précédentes, **caractérisée en ce que** le dispositif de verrouillage de support (32 ; 32' ; 33) contient un levier d'actionnement (120) logé de manière à pouvoir pivoter pour l'actionnement d'un élément d'actionnement (38) qui peut être déplacé par guidage dans un sens longitudinal sur le bras de retenue entre une position de déverrouillage et une position de verrouillage et verrouille au moins un élément de verrouillage (35) du bras de retenue dans la position de verrouillage dans un dispositif de verrouillage associé de l'appui côté véhicule, et **en ce que** le levier d'actionnement (120) est couplé à force par un engrenage (138) à l'élément d'actionnement (38).

13. Structure de support selon l'une quelconque des revendications précédentes, **caractérisée en ce que** pour l'alimentation de la structure de support (11, 12) et/ou d'une remorque accrochée à celle-ci en courant électrique, un dispositif d'établissement de contact de support (47) électrique est agencé sur au moins l'un des bras de retenue (15, 16 ; 15', 16'), lequel peut être raccordé électriquement à un dispositif d'établissement de contact d'appui électrique sur le véhicule automobile (14).

14. Structure de support selon l'une quelconque des revendications précédentes, **caractérisée en ce qu'**un attelage présentant une boule d'attelage agencée sur un col d'attelage pour l'accrochage d'une remorque au véhicule automobile (14) est ou peut être agencé sur l'ensemble de traverses (17 ; 17') et/ou **en ce que** l'ensemble de traverses (17 ; 17') présente une surface d'appui (61) sensiblement horizontale pour le dépôt et le transport d'objets et/ou au moins un porte-vélo et/ou un conteneur de transport et/ou un ensemble de châssis porteur et/ou un ensemble de marchepied.

15. Système doté d'une structure de support selon l'une quelconque des revendications précédentes, sachant que le système comporte l'ensemble d'appuis (13) pour l'agencement sur le véhicule automobile (14).

16. Système selon la revendication 15, **caractérisé en ce que** les appuis de l'ensemble d'appuis (13) peuvent être agencés dans la zone des longerons (20, 21) et/ou des cavités d'impact de la carrosserie.

17. Système selon la revendication 15 ou 16, **caractérisé en ce que** les appuis (18, 19) de l'ensemble d'appuis (13) présentent, à l'état monté, des logements à enfichage (25, 26) orientés sensiblement vers l'arrière du véhicule automobile (14) pour l'enfichage des bras de retenue (15, 16 ; 15', 16').

18. Système selon l'une quelconque des revendications 15 à 17, **caractérisé en ce que** l'ensemble d'appuis (13) présente un dispositif de verrouillage d'appui (34) pour le verrouillage de la structure de support, en particulier des bras de retenue.

19. Système selon la revendication 18, **caractérisé en ce que** le dispositif de verrouillage d'appui présente au moins un logement de verrouillage d'appui (37), dans lequel un élément de verrouillage de support (35) de la structure de support s'engage à l'état verrouillé et/ou le dispositif de verrouillage d'appui présente au moins un élément de verrouillage d'appui (45), en particulier un boulon de verrouillage et/ou une sphère de verrouillage qui s'engage à l'état verrouillé dans un logement de verrouillage d'appui (37) sur un bras de retenue (15, 16 ; 15', 16') respectif, en particulier sur le contour périphérique du bras de retenue.

20. Système selon la revendication 18 ou 19, **caractérisé en ce que** le dispositif de verrouillage d'appui présente un dispositif d'ajustage destiné à compenser un jeu d'au moins un élément de verrouillage d'appui (45).

21. Système selon l'une quelconque des revendications 15 à 20, **caractérisé en ce que** pour l'alimentation de la structure de support (11, 12) et/ou d'une remorque accrochée à celle-ci en courant électrique, un dispositif d'établissement de contact d'appui (50) électrique est agencé sur au moins l'un des appuis de l'ensemble d'appuis (13), lequel peut être raccordé électriquement à un dispositif d'établissement de contact de support électrique (47) de la structure de support.

22. Système selon la revendication 21, **caractérisé en ce que** le dispositif d'établissement de contact (50) est agencé dans un logement à enfichage (25, 26) de l'appui respectif (18, 19).

23. Véhicule automobile doté d'un système selon l'une quelconque des revendications 15 à 22.

24. Véhicule automobile selon la revendication 23, **caractérisé en ce qu'**au moins un élément d'impact (70) absorbant l'énergie, en particulier élastique, est agencé entre la carrosserie (22) et le pare-chocs arrière (31).

25. Véhicule automobile selon la revendication 23 ou 24, **caractérisé en ce que** les appuis (18, 19) font partie intégrante des longerons (20, 21) et/ou des cavités d'impact du véhicule automobile (14).
